(19) Europäisches Patentamt
European Patent Office
Office européen des brevets

(11) EP 3 581 609 B1

(12) **EUROPEAN PATENT SPECIFICATION**

(45) Date of publication and mention of the grant of the patent:
**02.08.2023 Bulletin 2023/31**

(21) Application number: **18751700.8**

(22) Date of filing: **05.02.2018**

(51) International Patent Classification (IPC):
***C08J 5/18*** *(2006.01)* ***C08L 33/12*** *(2006.01)*
***B29C 55/16*** *(2006.01)*

(52) Cooperative Patent Classification (CPC):
(C-Sets available)
**C08J 5/18; B29C 55/16; C08L 33/12;**
C08J 2333/12; C08J 2433/12; C08J 2469/00;
C08J 2471/00; C08L 2203/16 (Cont.)

(86) International application number:
**PCT/JP2018/003847**

(87) International publication number:
**WO 2018/147234 (16.08.2018 Gazette 2018/33)**

(54) **ACRYLIC RESIN BIAXIALLY STRETCHED FILM AND METHOD FOR MANUFACTURING THE SAME**

BIAXIAL GESTRECKTE ACRYLHARZFOLIE UND VERFAHREN ZUR IHRER HERSTELLUNG

FILM ÉTIRÉ BIAXIALEMENT DE RÉSINE ACRYLIQUE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.02.2017 JP 2017020052**

(43) Date of publication of application:
**18.12.2019 Bulletin 2019/51**

(73) Proprietor: **Kuraray Co., Ltd.**
**Okayama 710-0801 (JP)**

(72) Inventors:
- **TAKASUKA, Yuuki**
  **Tokyo 100-8115 (JP)**
- **FUKUHARA, Naoto**
  **Tsukuba-shi**
  **Ibaraki 305-0841 (JP)**
- **NAKAHARA, Atsuhiro**
  **Tokyo 100-8115 (JP)**

(74) Representative: **Müller-Boré & Partner Patentanwälte PartG mbB**
**Friedenheimer Brücke 21**
**80639 München (DE)**

(56) References cited:
**WO-A1-2015/151466**
**WO-A1-2016/076357**
**JP-A- H0 243 023**
**JP-A- 2008 101 202**
**JP-A- 2008 231 234**
**JP-A- 2008 546 024**
**JP-A- 2010 037 523**
**JP-A- 2010 052 323**
**JP-A- 2010 243 818**
**JP-A- 2012 096 461**
**JP-A- 2016 113 579**
**JP-A- 2016 535 159**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 33/12, C08L 33/12, C08L 69/00, C08L 77/00, C08L 2205/025, C08L 2205/035;**
**C08L 33/12, C08L 33/12, C08L 69/00, C08L 2205/025, C08L 2205/035;**
**C08L 33/12, C08L 69/00, C08L 77/00;**
**C08L 33/12, C08L 69/00, C08L 77/00, C08L 2205/03;**
**C08L 33/12, C08L 69/00, C08L 77/00, C08L 2205/035**

## Description

The present invention relates to an acrylic resin biaxially stretched film and a method for manufacturing the same. The present invention further relates to a polarizer protective film, a decorative film, and a layered film that use the acrylic resin biaxially stretched film.

A (meth)acrylic resin (which is referred to as a PMMA resin in some cases below) has high transparency, and is suitable for use as an optical member, an illuminating member, a signboard member, and a decorative member. A film made from a (meth)acrylic resin composition as a material has been used for applications, for example, a polarizer protective film, a decorative film, and the like.

However, the PMMA does not have a sufficient impact resistance strength. In this connection, Patent Literature 1 discloses a method for manufacturing a resin composition having transparency and impact resistance by blending a polycarbonate resin (which is referred to as a PC resin in some cases below) with the PMMA.

Further, Patent Literature 2 discloses a resin composition for an optical material in which 2 to 10 parts by weight of a PC resin are blended as a phase difference correcting agent for use as an optical member.

Further, Patent Document 3 discloses a method for manufacturing a transparent film by stretching a resin composition containing a (meth)acrylic resin, or a (meth)acrylic resin and a polycarbonate resin.

Although Patent Literature 1 discloses a method for manufacturing a transparent resin composition and Patent Literature 2 discloses a resin composition for an optical material having a low phase difference, they make no mention of processing conditions of the resin composition and control of physical properties of a film according to the conditions.

Further, the stretched film of a resin composition containing a (meth)acrylic resin composition and a polycarbonate resin that Patent Document 3 discloses has a large linear expansion coefficient and insufficient impact resistance.

Patent Literature 4 describes a film and process for producing the same. Patent Literature 5 discloses a methacrylic resin composition and molded body. Patent Literature 6 describes a biaxially stretched film and method for manufacturing same, polarizer protective film, decorative film, and layered film.

Patent Literature 1: Japanese Unexamined Patent Application Publication No. 2012-051997
Patent Literature 2: Japanese Unexamined Patent Application Publication No. 2014-064519
Patent Literature 3: International Patent Publication No. WO 2015/151466
Patent Literature 4: JP 2016/113579 A
Patent Literature 5: WO 2016/076357 A1
Patent Literature 6: WO 2015/151466 A1

The present invention has been made in view of the problems of the aforementioned related techniques and an object thereof is to solve the problems explained hereinafter. The present invention provides an acrylic resin film having a low linear expansion property, an excellent impact resistance, a high shrinkage starting temperature and an excellent dimensional stability. Further, the present invention provides a method for manufacturing a stretching film having a high shrinkage starting temperature and an excellent dimensional stability.

In order to achieve the aforementioned object, the present inventors have repeatedly studied and completed the present invention including the following aspects.

An invention to solve the aforementioned problems is as follows.

[1] A method for manufacturing an acrylic resin biaxially stretched film, the method including

biaxially stretching a raw film that includes a thermoplastic resin composition [C] containing 99.9 to 50 mass% of a (meth)acrylic resin [A] having a glass transition temperature $T_A$ of 140°C or lower and 0.1 to 50 mass% of a thermoplastic resin [B] having a glass transition temperature $T_B$ of ($T_A$+10°C) or higher at a temperature of a glass transition temperature $T_C$ of the resin composition [C] or higher and then
heat-setting the raw film at a temperature of (Tc-25°C) or higher but less than Tc.

[2] The method for manufacturing an acrylic resin biaxially stretched film according to [1], in which in the biaxial stretching, a stretching magnification is 1.5 to 3 times in both a longitudinal direction and a width direction.

[3] The method for manufacturing an acrylic resin biaxially stretched film according to [1] or [2], in which in the acrylic resin film, a shrinkage starting temperature is 110°C or higher, a linear expansion coefficient is 60 ppm/°C or less, and an impact resistance strength is 4.5 J/mm or more,
wherein the shrinkage starting temperature, the linear expansion coefficient and the impact resistance strength are determined as explained herein below.

[4] An acrylic resin biaxially stretched film obtainable by the method according to any one of [1] to [3] that includes

a thermoplastic resin composition [C], the thermoplastic resin composition [C] containing:

99.9 to 50 mass% of a (meth)acrylic resin [A] having a glass transition temperature $T_A$ of 140°C or lower; and 0.1 to 50 mass% of a thermoplastic resin [B] having a glass transition temperature $T_B$ of ($T_A$+10°C) or higher, in which
a shrinkage starting temperature is 110°C or higher, a linear expansion coefficient is 60 ppm/°C or less, and an impact resistance strength is 4.5 J/mm or more,
wherein the shrinkage starting temperature, the linear expansion coefficient and the impact resistance strength are determined as explained herein below.

[5] The acrylic resin biaxially stretched film according to [4], in which a tear strength is 1.5 gf ($1.47\times10^{-2}$N) or more, wherein the tear strength is determined as explained herein below.
[6] The acrylic resin biaxially stretched film according to [4] or [5], in which the thermoplastic resin composition [C] has a single glass transition temperature $T_C$.
[7] The acrylic resin biaxially stretched film according to any one of [4] to [6], in which the thermoplastic resin [B] includes at least one type of a thermoplastic resin selected from a group composed of a polycarbonate resin, a copolymer composed of at least a structural unit derived from an aromatic vinyl compound expressed by the following general formula (a) and a structural unit derived from an acid anhydride expressed by the following general formula (b), and a methacrylic resin having a triad syndiotacticity (rr) of 58% or more and a content of a structural unit derived from methyl methacrylate of 90 mass% or more.

[Formula 1]

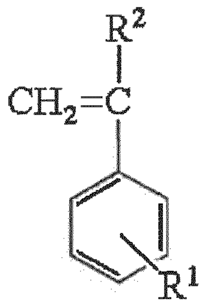

(a)

(In the formula: $R^1$ and $R^2$ each independently indicates a hydrogen atom or an alkyl group.)

[Formula 2]

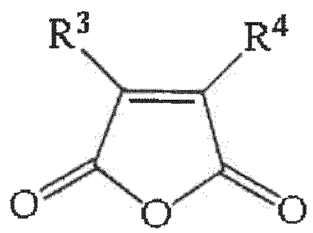

(b)

(In the formula: $R^3$ and $R^4$ each independently indicates a hydrogen atom or an alkyl group.)
[8] The acrylic resin biaxially stretched film according to any one of [4] to [7], in which a stretching magnification is 1.5 to 3 times in both a longitudinal direction and a width direction.
[9] A polarizer protective film, an optical compensation film or a decorative film comprising the film according to any one of [4] to [8].

The acrylic resin biaxially stretched film according to the present invention has a high light transmittance, a low haze, a small linear expansion coefficient, a high shrinkage starting temperature, an excellent impact resistance, so that

it is suitable for optical members and automobile members.

"Acrylic resin biaxially stretched film"

The acrylic resin biaxially stretched film according to the present invention is an acrylic resin film containing 99.9 to 50 mass% of a (meth)acrylic resin [A] having a glass transition temperature $T_A$ of 140°C or lower, and 0.1 to 50 mass% of a thermoplastic resin [B] having a glass transition temperature $T_B$ of ($T_A$+10°C) or higher, in which a shrinkage starting temperature is 110°C or higher, a linear expansion coefficient is 60 ppm/°C or less, and an impact resistance strength is 4.5 J/mm or more.

The "glass transition temperature" herein is an intermediate glass transition temperature obtained from a DSC curve that is measured under the condition where the temperature is raised by using a differential scanning calorimetry in accordance with JIS K7121. The glass transition temperature can be measured by the methods described in the [Example].

<(Meth)acrylic resin (A)>

The (meth)acrylic resin (A) is not limited to particular resins and any (meth)acrylic polymer and a mixture thereof having the glass transition temperature $T_A$ of 140°C or lower may be used. The (meth)acrylic resin (A) contains one or more types of methacrylate ester monomer units such as a methyl methacrylate (MMA) monomer unit. Examples of the methacrylate ester include: methacrylic acid alkyl esters such as MMA, ethyl methacrylate and butyl methacrylate; methacrylic acid aryl esters such as phenyl methacrylate; methacrylic acid cycloalkyl esters such as cyclohexyl methacrylate and norbornenyl methacrylate. Among them, a methacrylic acid alkyl ester is preferred, and MMA is most preferred.

The content of the methacrylate ester monomer unit in the (meth)acrylic resin (A) is preferably 20 mass% or more, more preferably 50 mass% or more. Examples of the (meth)acrylic resin (A) include a methacrylic copolymer (A1) containing a methacrylate ester monomer as a primary component, and a methacrylic copolymer (A2) containing a methacrylate ester monomer unit and a structural unit having a ring structure in the main chain.

Further, the (meth)acrylic resin (A) is not limited to resins composed of only one type of the above-mentioned polymers, and may contain a plurality of methacrylic copolymers as long as it is a combination capable of achieving compatibility.

<Methacrylic copolymer (A1)>

The content of the methacrylate ester monomer unit in the methacrylic copolymer (A1) is preferably 90 mass% or more, more preferably 95 mass% or more, even more preferably 98 mass% or more, particularly preferably 99 mass% or more, and most preferably 100 mass%.

The content of the MMA monomer unit in the methacrylic copolymer (A1) is preferably 90 mass% or more, more preferably 95 mass% or more, even more preferably 98 mass% or more, particularly preferably 99 mass% or more, and most preferably 100 mass%.

The methacrylic copolymer (A1) may contain one or more types of monomer units other than the methacrylate ester monomer unit. Examples of other monomer units include structural units derived from vinyl monomers containing only one polymerizable carbon-carbon double bond in one molecule, for example, acrylic acid alkyl esters such as methyl acrylate, ethyl acrylate, propyl acrylate, butyl acrylate, and 2-ethylhexyl acrylate; an acrylic acid aryl ester such as phenyl acrylate; acrylic acid cycloalkyl esters such as cyclohexyl acrylate and norbornenyl acrylate; aromatic vinyl compounds such as styrene and $\alpha$-methylstyrene; acrylamide and methacrylamide; and nitriles such as acrylonitrile and methacrylonitrile.

An Mw of the methacrylic copolymer (A1) is preferably 40,000 to 200,000, more preferably 50,000 to 150,000, and particularly preferably 80,000 to 120,000. With the Mw of 40,000 or more, the mechanical strength (impact resistance and toughness, etc.) of the resultant molded article is likely to increase, and with the Mw of 200,000 or less, the fluidity of the (meth)acrylic resin composition is likely to increase, thereby increasing the formability thereof.

A molecular weight distribution (Mw/Mn) of the methacrylic copolymer (A1) is preferably 1.6 to 5.0, more preferably 1.7 to 3.0, and particularly preferably 1.7 to 2.0. When the methacrylic copolymer (A1) having a molecular weight distribution (Mw/Mn) within such a range is used, the resultant molded article has excellent mechanical strength. An Mw and an Mw/Mn can be controlled by adjusting the type and/or the amount of a polymerization initiator used at the time of manufacturing the methacrylic copolymer (A1).

A melt flow rate (MFR) of the methacrylic copolymer (A1) measured at 230°C and 3.8 kg load is preferably 0.1 g/10 min or more, more preferably 0.1 to 30 g/10 min, even more preferably 0.2 to 15 g/10 min, particularly preferably 0.5 to 10 g/ 10 min, and most preferably 1.0 to 3.0 g/10 min.

The methacrylic copolymer (A1) can be manufactured by using known polymerization methods such as a radical polymerization method and an anionic polymerization method. As the radical polymerization method, it is possible to select a known polymerization method, for example, a bulk polymerization method, a solution polymerization method, a suspension polymerization method, and an emulsion polymerization method to manufacture the methacrylic copolymer while as the anionic polymerization method, it is possible to select a known polymerization method, for example, a bulk polymerization method and a solution polymerization method to manufacture the methacrylic copolymer. For example, using the anionic polymerization method under a low temperature makes it possible to obtain a resin having a syndiotacticity (rr) of 65% or more and a significantly increased glass transition temperature, and the heat resistance of the stretching film is thus enhanced.

It is possible to perform the radical polymerization method in the absence of solvent or in a solvent. In order to obtain the methacrylic copolymer (A1) having a low impurity concentration, it is preferred that the radical polymerization method be performed in the absence of solvent. The polymerization reaction is preferably carried out under an inert gas atmosphere such as nitrogen gas at a low dissolved oxygen level in order to prevent the molded article from silvering or coloring.

Examples of a polymerization initiator used in the radical polymerization method include: t-hexylperoxyisopropyl monocarbonate; t-hexylperoxy 2-ethylhexanoate; 1,1,3,3-tetramethylbutylperoxy 2-ethylhexanoate; t-butylperoxypivalate; t-hexylperoxypivalate; t-butylperoxyneodecanoate; t-hexylperoxyneodecanoate; 1,1,3,3-tetramethylbutylperoxyneodecanoate; 1,1-bis(t-hexylperoxy)cyclohexane; benzoyl peroxide; 3,5,5-trimethylhexanoylperoxide; lauroyl peroxide; 2,2'-azobis(2-methylpropionitrile); 2,2'-azobis(2-methylbutyronitrile), and dimethyl 2,2'-azobis(2-methylpropionate). Among them, t-hexylperoxy 2-ethylhexanoate, 1,1-bis(t-hexylperoxy)cyclohexane, and dimethyl 2,2'-azobis(2-methylpropionate) are preferred. One or more types of the polymerization initiators can be used.

The 1 hour half-life temperature of the polymerization initiator is preferably 60 to 140°C, more preferably 80 to 120°C. The polymerization initiator preferably has a hydrogen abstraction ability of 20% or less, more preferably 10% or less, particularly preferably 5% or less. The amount of the polymerization initiator used is, with respect to 100 parts by mass of one or more types of monomers used for a polymerization reaction, preferably 0.0001 to 0.02 parts by mass, more preferably 0.001 to 0.01 parts by mass, and particularly preferably 0.005 to 0.007 parts by mass.

Note that it is possible to obtain knowledge about the hydrogen abstracting ability from, for example, technical information of the polymerization initiator manufacturer (for example, technical information of NOF CORPORATION, "Hydrogen abstraction ability and initiator efficiency of organic peroxide" (prepared in April 2003)). Further, the hydrogen abstracting ability can be measured by a radical trapping method ($\alpha$-methyl styrene dimer trapping method) using $\alpha$-methyl styrene dimer. This measurement is commonly performed as follows. First, radical fragments are generated by cleaving the polymerization initiator with the presence of $\alpha$-methylstyrene dimer as a radical trapping agent. Among the generated radical fragments, a radical fragment having a low hydrogen abstraction ability is bound to and trapped by a double bond of $\alpha$-methylstyrene dimer. On the other hand, a radical fragment having a high hydrogen abstraction ability extracts hydrogen from cyclohexane to generate a cyclohexyl radical, and this cyclohexyl radical is bound to and trapped by a double bond of $\alpha$-methylstyrene dimer to form a cyclohexane trapped product. Accordingly, a ratio (a mole fraction) of radical fragments having a high hydrogen abstraction ability with respect to the quantity of the theoretically generated radical fragments, which is obtained by determining the quantity of cyclohexane or a cyclohexane trapped product, is obtained as hydrogen abstraction ability.

Examples of a chain transfer agent used in the radical polymerization method include alkyl mercaptans such as n-octyl mercaptan, n-dodecyl mercaptan, t-dodecyl mercaptan, 1,4-butanedithiol, 1,6-hexanedithiol, ethylene glycol bisthiopropionate, butanediol bisthioglycolate, butanediol bisthiopropionate, hexanediol bisthioglycolate, hexanediol bisthiopropionate, trimethylolpropane tris-($\beta$-thiopropionate), and pentaerythritol tetrakisthiopropionate. Among them, monofunctional alkyl mercaptans such as n-octyl mercaptan and n-dodecyl mercaptan are preferred. One or more types of the chain transfer agents can be used.

In view of moldability of a resin and mechanical strength of a molded article, the amount of the chain transfer agent used is, with respect to 100 parts by mass of one or more types of monomers used for a polymerization reaction, preferably 0.01 to 1 part by mass, more preferably 0.05 to 0.8 parts by mass, particularly preferably 0.1 to 0.6 parts by mass, and most preferably 0.10 to 0.5 parts by mass. The amount of the chain transfer agent used is, with respect to 100 parts by mass of the polymerization initiator, preferably 2,500 to 10,000 parts by mass, more preferably 3,000 to 9,000 parts by mass, and particularly preferably 3,500 to 6,000 parts by mass.

Solvents used in the radical polymerization method are preferably aromatic hydrocarbons such as benzene, toluene, and ethylbenzene. One or more types of solvents can be used. In view of viscosity of a reaction solution and productivity, the amount of the solvent used is preferably 100 parts by mass or less, and more preferably 90 parts by mass or less with respect to 100 parts by mass of the polymerization reaction raw material.

A polymerization reaction temperature is preferably 100 to 200°C and more preferably 110 to 180°C. With the polymerization temperature of 100°C or higher, productivity is likely to be improved due to improvement in polymerization rate and reduction in viscosity of the polymerization solution. The polymerization temperature of 200°C or lower makes

it possible to easily control the polymerization rate, to reduce further generation of by-products, and to reduce coloring of the resin. In view of production efficiency, the polymerization reaction time is preferably 0.5 to 4 hours, more preferably 1.5 to 3.5 hours, and particularly preferably 1.5 to 3 hours. Note that the polymerization reaction time when a continuous flow reactor is used is an average residence time in a reactor.

A polymerization conversion rate in the radical polymerization method is preferably 20 to 80 mass%, more preferably 30 to 70 mass%, and particularly preferably 35 to 65 mass%. With the polymerization conversion rate of 20 mass% or more, remaining unreacted monomers tend to be easily removed, thereby obtaining a molded article having a good appearance. With the polymerization conversion rate is 70 mass% or less, viscosity of the polymerization solution tends to be reduced, thereby increasing productivity.

A reactor may be either a batch type or a continuous flow type, and a continuous flow reactor is preferred in view of productivity. In the continuous flow type reaction, the polymerization reaction raw material (a mixed solution containing one or more monomers, a polymerization initiator and a chain transfer agent and so on) is prepared under an inert atmosphere such as nitrogen, the prepared material is supplied to a reactor at a constant flow rate, and then liquid in the reactor is extracted at a flow rate corresponding to the supply amount. Examples of a reactor include a tubular reactor which can be brought into a state close to a plug flow one or a tank reactor which can be brought into a state close to a completely mixed one. One or more reactors may be used, and at least one continuous-flow tank reactor is preferably used. The amount of the liquid in the tank reactor during the polymerization reaction is preferably 1/4 to 3/4 and more preferably 1/3 to 2/3 with respect to a volume of the tank reactor. An agitating apparatus is usually attached to the reactor. Examples of the agitating apparatus include a static agitating apparatus and a dynamic agitating apparatus. Examples of the dynamic agitating apparatus include a Maxblend type agitating apparatus, an agitating apparatus having a grid-like wing rotating around a vertical rotating shaft provided at the center, a propeller type agitating apparatus, and a screw type agitating apparatus. Among them, a Maxblend type agitating apparatus is preferred in order to mix uniformly.

After the completion of polymerization, volatile matter such as unreacted monomers is removed as necessary. A heat devolatilization method is preferred as a removal method. Examples of the devolatilization method include an equilibrium flash method and an adiabatic flash method. The devolatilization temperature in the adiabatic flash method is preferably 200 to 280°C, and more preferably 220 to 260°C. The heating time of a resin in the adiabatic flash method is preferably 0.3 to 5 minutes, more preferably 0.4 to 3 minutes, and particularly preferably 0.5 to 2 minutes. When devolatilization is made in such temperature range and heating time, a (meth)acrylic resin (A) with less coloring is likely to be obtained. The removed unreacted monomers can be recovered and used again for the polymerization reaction. A yellow index of the recovered monomers may be increased by heat applied during the recovery operation or the like. The yellow index is preferably reduced by purifying the recovered monomers by a known method.

Examples of a method for controlling a molecular weight distribution (Mw/Mn) include a controlled polymerization method, and a living radical polymerization method and a living anionic polymerization are preferred. Examples of the living radical polymerization method include an atom transfer radical polymerization (ATRP) method, a reversible addition fragmentation chain transfer (RAFT) polymerization method, a nitroxide-mediated polymerization (NMP) method, a boron-mediated polymerization method, and a catalyst chain transfer (CCT) polymerization method. Examples of the (living) anionic polymerization method include: a method for performing an anionic polymerization in the presence of a mineral acid salt such as a salt of an alkali metal or an alkaline earth metal using an organic alkali metal compound as a polymerization initiator (see Japanese Examined Patent Publication No. H7-25859); a method for performing an anionic polymerization in the presence of an organoaluminum compound using an organic alkali metal compound as a polymerization initiator (see Japanese Unexamined Patent Publication No. H11-335432); and a method for performing an anionic polymerization using an organic rare earth metal complex as a polymerization initiator (see Japanese Unexamined Patent Publication No. H6-93060).

Lithium alkyls such as n-butylithium, sec-butylithium, isobutylithium, and tert-butylithium are preferred as a polymerization initiator used in the anionic polymerization method. An organoaluminum compound preferably coexists in view of productivity.

Examples of the organoaluminum compound include a compound represented by the expression: $AlR^AR^BR^C$ (in the expression, $R^A$ to $R^C$ each independently indicates, an alkyl group which has no substituent or which has a substituent, a cycloalkyl group which has no substituent or which has a substituent, an aryl group which has no substituent or which has a substituent, an aralkyl group which has no substituent or which has a substituent, an alkoxyl group which has no substituent or which has a substituent, an aryloxy group which has no substituent or which has a substituent or an N, N-disubstituted amino group. $R^B$ and $R^C$ may be an arylenedioxy group which has no substituent or which has a substituent, in combination.).

Examples of the organoaluminum compound include isobutylbis(2,6-di-tert-butyl-4-methylphenoxy)aluminum, isobutylbis(2,6-di-tert-butylphenoxy)aluminum, and isobutyl[2,2'-methylenebis(4-methyl-6-tert-butylphenoxy) aluminum.

In the anion polymerization method, ether, a nitrogen-containing compound and the like may coexist in order to control polymerization reaction.

<Methacrylic copolymer (A2)>

As a structural unit having a ring structure in the main chain in a methacrylic copolymer (A2), a structural unit containing a lactone ring unit, a maleic anhydride unit, a glutaric anhydride unit, a glutarimide unit, an N-substituted maleimide unit, or a tetrahydropyran ring unit are preferred as the ring structure. Examples of a method for manufacturing the methacrylic copolymer (A2) include: a method for copolymerizing a cyclic monomer having polymerizable unsaturated carbon-carbon double bonds such as maleic anhydride and N-substituted maleimide with MMA or the like; and a method for intramolecularly cyclizing a part of the molecular chains of the methacrylic copolymer obtained by polymerization.

The content of the MMA monomer unit in the methacrylic copolymer (A2) is preferably 20 to 99 mass%, more preferably 30 to 95 mass%, and particularly preferably 40 to 90 mass%, and the content of the structural unit having a ring structure in the main chain is preferably 1 to 80 mass%, more preferably 5 to 70 mass%, and particularly preferably 10 to 60 mass%. Note that the content of the MMA monomer unit in the methacrylic copolymer (A2) does not include an MMA monomer unit which has been converted into a structural unit having a ring structure in the main chain by intramolecular cyclization among the MMA monomer units.

As the structural unit having a ring structure in the main chain, a structural unit containing a >CH-O-C(=O)-group in the ring structure, a structural unit containing a -C(=O)-O-C(=O)- group in a ring structure, a structural unit containing a -C(=O)-N-C(=O)- group in a ring structure, or a structural unit containing a >CH-O-CH< group in a ring structure are preferred.

Examples of the structural unit containing a >CH-O-C(=O)-group in the ring structure include lactonediyl structural units such as β-propiolactonediyl (also known as oxooxetanediyl) structural unit, γ-butyrolactonediyl (also known as 2-oxodihydrofurandiyl) structural unit, and δ-valerolactonediyl (also known as 2-oxodihydropyranediyl) structural unit. Note that ">C" in the formula means that there are two bonds at a carbon atom C.

Examples of the δ-valerolactonediyl structural unit include a structural unit expressed by the following formula (c).

[Formula 3]

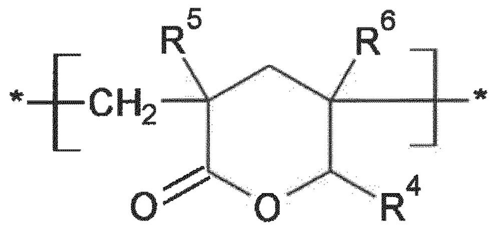

(c)

In the formula (c), $R^4$ and $R^5$ are each independently a hydrogen atom or an organic residue having 1 to 20 carbon atoms, and it is preferred that $R^4$ be a hydrogen atom and $R^5$ be a methyl group. $R^6$ is - COOR, and R is a hydrogen atom or an organic residue having 1 to 20 carbon atoms and is preferably a methyl group. "*" means a bond.

Examples of the aforementioned organic residue include a linear or branched alkyl group, a linear or branched alkylene group, an aryl group, a -OAc group, and a -CN group. The organic residue may contain an oxygen atom. "Ac" represents an acetyl group. The carbon number of the organic residue is preferably 1 to 10, and more preferably 1 to 5.

The (meth)acrylic resin can contain the δ-valerolactonediyl structural unit, for example, by intramolecular cyclization of two MMA monomer units adjacent to each other.

Examples of a structural unit containing a -C(=O)-O-C(=O)-group in the ring structure include a 2,5-dioxodihydrofurandiyl structural unit, a 2,6-dioxodihydropyrandiyl structural unit, and a 2,7-dioxooxepanediyl structural unit.

Examples of the 2,5-dioxodihydrofurandiyl structural unit include a structural unit expressed by the following formula (d).

[Formula 4]

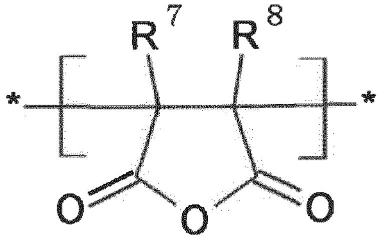

(d)

In the formula (d), $R^7$ and $R^8$ are each independently a hydrogen atom or an organic residue having 1 to 20 carbon atoms. "*" means a bond.

Examples of the aforementioned organic residue include a linear or branched alkyl group, a linear or branched alkylene group, an aryl group, a -OAc group, and a -CN group. The organic residue may contain an oxygen atom. "Ac" represents an acetyl group. The carbon number of the organic residue is preferably 1 to 10, and more preferably 1 to 5.

$R^7$ and $R^8$ both are preferably hydrogen atoms. In such a case, styrene and the like are preferably copolymerized in view of ease of manufacturing and an adjustment of intrinsic birefringence. Specifically, a copolymer having a styrene monomer unit, an MMA monomer unit and a maleic anhydride monomer unit disclosed in International Patent Publication No. WO2014/021264 and the like may be used.

The (meth)acrylic resin can contain the 2,5-dioxodihydrofurandiyl structural unit, for example, by copolymerization using maleic anhydride.

Examples of the 2,6-dioxodihydropyrandiyl structural unit include a structural unit expressed by the following formula (e).

[Formula 5]

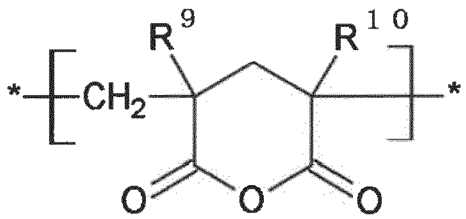

(e)

In the formula (e), $R^9$ and $R^{10}$ are each independently a hydrogen atom or an organic residue having 1 to 20 carbon atoms. "*" means a bond.

Examples of the aforementioned organic residue include a linear or branched alkyl group, a linear or branched alkylene group, an aryl group, a -OAc group, and a -CN group. The organic residue may contain an oxygen atom. "Ac" represents an acetyl group. The organic residue preferably has a carbon number of 1 to 10, more preferably has a carbon number of 1 to 5, and is particularly preferably a methyl group.

The (meth)acrylic resin can contain the 2,6-dioxodihydropyrandiyl structural unit, for example, by intramolecular cyclization of two MMA monomer units adjacent to each other.

Examples of a structural unit containing a -C(=O)-N-C(=O)-group in the ring structure (note that another bond included in N is omitted) include a 2,5-dioxopyrrolidinediyl structural unit, a 2,6-dioxopiperidinediyl structural unit, and a 2,7-dioxoazepandiyl structural unit.

Examples of the 2,6-dioxopiperidinediyl structural unit include a structural unit expressed by the following formula (f).

[Formula 6]

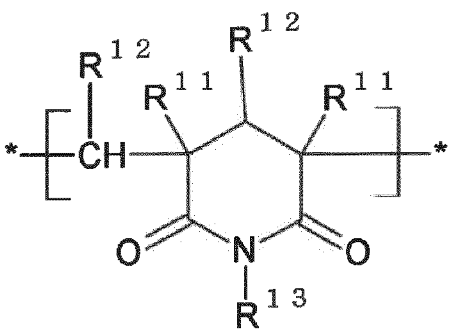

(f)

In the formula (f), $R^{11}$ and $R^{12}$ are each independently a hydrogen atom or an alkyl group having 1 to 8 carbon atoms, and $R^{13}$ is a hydrogen atom, an alkyl group having 1 to 18 carbon atoms, a cycloalkyl group having 3 to 12 carbon atoms or an aryl group having 6 to 10 carbon atoms. "*" means a bond.

In view of availability of raw materials, cost, heat resistance and the like, $R^{11}$ and $R^{12}$ are preferably each independently a hydrogen atom or a methyl group, and it is more preferred that $R^{11}$ be a methyl group and $R^{12}$ be a hydrogen atom. $R^{13}$ is preferably a hydrogen atom, a methyl group, an n-butyl group, a cyclohexyl group or a benzyl

group, and more preferably a methyl group.

Examples of the 2,5-dioxopyrrolidinediyl structural unit include a structural unit expressed by the following formula (g).

[Formula 7]

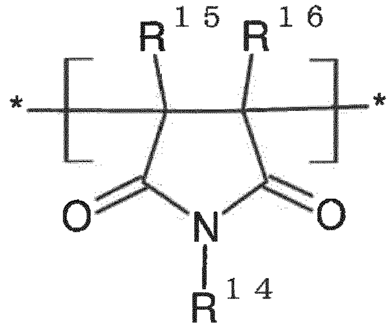

(g)

In the formula (g), $R^{15}$ and $R^{16}$ are each independently a hydrogen atom, an alkyl group having 1 to 12 carbon atoms, or an alkyl group having 6 to 14 carbon atoms. $R^{14}$ is an arylalkyl group having 7 to 14 carbon atoms, or an aryl group having 6 to 14 carbon atoms which has no substituent or which has a substituent. The substituent here is a halogeno group, a hydroxyl group, a nitro group, an alkoxy group having 1 to 12 carbon atoms, an alkyl group having 1 to 12 carbon atoms, or an arylalkyl group having 7 to 14 carbon atoms. "*" means a bond. $R^{14}$ is preferably a phenyl group or a cyclohexyl group, and $R^{15}$ and $R^{16}$ are both preferably hydrogen atoms.

The (meth)acrylic resin can contain the 2,5-dioxopyrrolidinediyl structural unit, for example, by copolymerization using N-substituted maleimide.

Examples of the structural unit containing a >CH-O-CH< group in the ring structure include an oxetanediyl structural unit, a tetrahydrofurandiyl structural unit, a tetrahydropyrandiyl structural unit, and an oxepanediyl structural unit. Note that ">C" in the formula means that there are two bonds at a carbon atom C.

Examples of the tetrahydropyrandiyl structural unit include a structural unit expressed by the following formula (h).

[Formula 8]

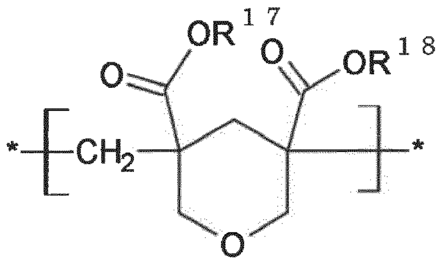

(h)

In the formula (h), $R^{17}$ and $R^{18}$ are each independently a hydrogen atom, a linear or branched hydrocarbon group having 1 to 20 carbon atoms, or a hydrocarbon group having 3 to 20 carbon atoms having a ring structure. "*" means a bond. It is preferred that $R^{17}$ and $R^{18}$ be each independently a tricyclo [5.2.1.0$^{2,6}$] decanyl group, a 1,7,7-trimethylbicyclo [2.2.1] heptan-3-yl group, a t-butyl group, and a 4-t-butylcyclohexanyl group.

Among the above structural units having the ring structure in the main chain, a δ-valerolactonediyl structural unit and a 2,5-dioxodihydrofurandiyl structural unit are preferable in view of raw materials and ease of manufacturing.

A molecular weight distribution (a ratio Mw/Mn of a weight average molecular weight (Mw) to the number average molecular weight (Mn)) of the methacrylic copolymer (A2) is preferably 1.2 or greater and 5.0 or less, more preferably 1.3 or greater and 3.5 or less. As the Mw/Mn becomes low, impact resistance and toughness of the resultant molded article tend to be satisfactory. As the Mw/Mn becomes high, melt fluidity of the (meth)acrylic resin composition tends to be high, and thus surface smoothness of the resultant molded article tends to be satisfactory.

The Mw and Mn herein are values obtained by converting the chromatogram measured by gel permeation chromatography (GPC) into a molecular weight of standard polystyrene. The Mw and the Mw/Mn can be measured by the methods described in the [Example] section.

The glass transition temperature of the methacrylic copolymer (A2) is preferably 120°C or higher, more preferably 123°C or higher, and particularly preferably 124°C or higher.

<Thermoplastic resin (B)>

The thermoplastic resin (B) is not limited to particular resins and any resins of which the glass transition temperature $T_B$ is, with respect to the glass transition temperature $T_A$ of the (meth)acrylic resin (A), at least ($T_A$+10°C) may be used. Examples of the thermoplastic resin used for a thermoplastic resin layer include:

cyclic olefin resins such as polycyclo-olefin and polynorbornene;
halogen-containing resins such as a vinyl chloride resin and a chlorinated vinyl resin;
styrene resins such as a styrene-methyl methacrylate copolymer, a styrene-acrylonitrile copolymer, and an α-methylstyrene-methyl methacrylate copolymer;
(meth)acrylic resins such as a homopolymer of (meth)acrylate ester, a copolymer of (meth)acrylate ester, a copolymer of (meth)acrylate ester and N-substituted maleimide, a copolymer of (meth)acrylate ester and (meth)acrylic acid anhydride, and a copolymer of (meth)acrylate ester and glutarimide;
ester resins such as polyethylene terephthalate, polybutylene terephthalate, and polyethylene naphthalate;
amid resins such as nylon 6, nylon 66, and nylon 610;
a cellulose resin such as triacetyl cellulose;
a carbonate resin;
a phenylene-oxide resin;
a phenylene-sulfide resin;
an etheretherketone resin;
an ether nitrile resin;
an amide-imide resin;
a phenoxy resin; and
an SMA resin.

Among the aforementioned thermoplastic resins, resins having high compatibility with the (meth)acrylic resin (A) are suitable in view of transparency. A (meth)acrylic resin (B1) having a high triad syndiotacticity (rr), a polycarbonate resin (B2), a copolymer (B3) composed of at least a structural unit derived from an aromatic vinyl compound (a) and a structural unit derived from an acid anhydride (b), and the like may be used.

<(Meth)acrylic resin (B1)>

The (meth)acrylic resin (B1) has a triad syndiotacticity (rr) of 65% or more, preferably 70 to 90%, more preferably 72 to 85%, and even more preferably 74% to 80%. The triad syndiotacticity (rr) of 65% or more significantly increases the glass transition temperature $T_B$, thereby increasing heat resistance and impact resistance of the resultant stretching film.

A molecular weight distribution (Mw/Mn) of the (meth)acrylic resin (B1) is preferably 1.0 to 1.8, more preferably 1.0 to 1.4, even more preferably 1.02 to 1.3, and particularly preferably 1.03 to 1.1. An Mw and an Mw/Mn can be controlled by adjusting the type and/or the amount of a polymerization initiator used at the time of manufacturing.

The (meth)acrylic resin (B1) may contain one or more types of monomer units other than the aforementioned MMA monomer unit. Examples of other monomer units include structural units derived from vinyl monomers containing only one polymerizable carbon-carbon double bond in one molecule, for example, acrylic acid alkyl esters such as methyl acrylate, ethyl acrylate, propyl acrylate, butyl acrylate, and 2-ethylhexyl acrylate; an acrylic acid aryl ester such as phenyl acrylate; acrylic acid cycloalkyl esters such as cyclohexyl acrylate and norbornenyl acrylate; aromatic vinyl compounds such as styrene and α-methylstyrene; and nitriles such as acrylonitrile and methacrylonitrile.

An Mw of the (meth)acrylic resin (B1) is preferably 40,000 to 200,000, more preferably 40,000 to 150,000, even more preferably 50,000 to 120,000, and particularly preferably 50,000 to 90,000. With the Mw of 40,000 or more, the mechanical strength (impact resistance and toughness, etc.) of the resultant molded article is likely to increase, and with the Mw of 200,000 or less, the fluidity of the (meth)acrylic resin composition is likely to increase, thereby increasing the formability thereof.

A melt flow rate (MFR) of the (meth)acrylic resin (B1) measured at 230°C and 3.8 kg load is preferably 0.1 g/10 min or more, more preferably 0.2 to 30 g/10 min, even more preferably 0.5 to 20 g/10 min, particularly preferably 0.5 to 10 g/10 min, and most preferably 1.0 to 3.0 g/10 min.

A method for manufacturing the (meth)acrylic resin (B1) is as described above.

<Polycarbonate resin (B2)>

Examples of a polycarbonate resin (PC) include a polymer obtained by a reaction of a polyfunctional hydroxy compound and a carbonic acid ester-forming compound. An aromatic polycarbonate resin is preferably used in view of compatibility with the (meth)acrylic resin and transparency of the resultant molded article,

In view of compatibility with the (meth)acrylic resin and transparency, surface smoothness and the like of the resultant molded article, the polycarbonate resin (PC) preferably has a melt volume flow rate (MVR) measured at 300°C and 1.2 kg load of 15 to 250 $cm^3$/10 min, more preferably 20 to 230 $cm^3$/10 min, even more preferably 25 to 230 $cm^3$/10 min, and particularly preferably 150 to 220 $cm^3$/10 min.

In view of compatibility with the (meth)acrylic resin, and transparency, surface smoothness and the like of the resultant molded article, the polycarbonate resin (PC) preferably has the polystyrene-equivalent Mw of 15,000 to 40,000, more preferably 18,000 to 39,000, even more preferably 20,000 to 38,000, and particularly preferably 20,000 to 25,000.

Note that the MVR and the Mw of the polycarbonate resin (PC) can be controlled by adjusting the amount of a chain-terminating agent and/or a branching agent.

The glass transition temperature of the polycarbonate resin (PC) is preferably 130°C or higher, more preferably 135°C or higher, and particularly preferably 140°C or higher. The upper limit of the glass transition temperature is usually 180°C.

As a method for manufacturing the polycarbonate resin (PC), a phosgene method (an interfacial polymerization method), and a melt polymerization method (a transesterification method) may be used. The aromatic polycarbonate resin can be manufactured by performing processing of adjusting the amount of terminal hydroxy groups on the polycarbonate resin raw material manufactured by the melt polymerization method.

The polycarbonate resin (PC) may contain structural units such as polyester, polyurethane, polyether or polysiloxane other than the polycarbonate structural unit.

<SMA resin (B3)>

Suitable examples can include the SMA resin (B3) composed of at least a structural unit derived from an aromatic vinyl compound (a) expressed by the following general formula (a) and a structural unit derived from an acid anhydride (b) expressed by the following general formula (b).

[Formula 9]

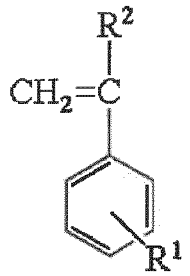

(a)

(In the formula: $R^1$ and $R^2$ each independently indicates a hydrogen atom or an alkyl group.)

[Formula 10]

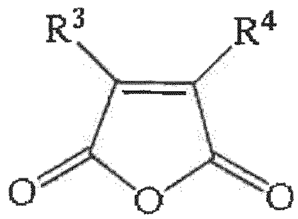

(b)

(In the formula: $R^3$ and $R^4$ each independently indicates a hydrogen atom or an alkyl group.)

As an alkyl group which each of $R^1$ and $R^2$ in the general formula (a) and $R^3$ and $R^4$ in the general formula (b)

independently indicates, an alkyl group having 12 or less carbon atoms such as a methyl group, an ethyl group, an n-propyl group, an isopropyl group, an n-butyl group, a sec-butyl group, an isobutyl group, a t-butyl group, an n-pentyl group, an isopentyl group, a neopentyl group, an n-hexyl group, an n-heptyl group, an n-octyl group, a 2-ethylhexyl group, a nonyl group, a decyl group, and a dodecyl group are preferred, and an alkyl group having 4 or less carbon atoms such as a methyl group, an ethyl group, an n-propyl group, an isopropyl group, an n-butyl group, a sec-butyl group, an isobutyl group, and a t-butyl group are more preferred.

A hydrogen atom, a methyl group, an ethyl group and a t-butyl group are preferred as $R^1$. A hydrogen atom, a methyl group, and an ethyl group are preferred as $R^2$, $R^3$, and $R^4$.

The content of the structural unit derived from the aromatic vinyl compound (a) in the aforementioned SMA resin is preferably in the range of 50 to 85 mass%, more preferably in the range of 55 to 82 mass%, and even more preferably 60 to 80 mass%. When this content is in the range of 50 to 85 mass%, the resin composition (C) is excellent in moisture resistance and transparency.

Examples of the aromatic vinyl compound (a) include: styrene; nuclear alkyl-substituted styrene such as 2-methylstyrene, 3-methylstyrene, 4-methylstyrene, 4-ethylstyrene, and 4-tert-butylstyrene; and $\alpha$-alkyl substituted styrene such as $\alpha$-methylstyrene, and 4-methyl-$\alpha$-methylstyrene, and styrene is preferred in view of availability. A single type of these aromatic vinyl compounds (a) may be used alone or a plurality of types of them may be used in combination.

The content of the structural unit derived from the acid anhydride (b) in the aforementioned SMA resin is preferably in the range of 15 to 50 mass%, more preferably in the range of 18 to 45 mass%, and even more preferably 20 to 40 mass%. When the content is in the range of 15 to 50 mass%, the resin composition (B3) has a high glass transition temperature and is excellent in mechanical strength.

Examples of the acid anhydride (b) include maleic anhydride, citraconic anhydride and dimethylmaleic anhydride, and maleic anhydride is preferred in view of availability. A single type of these acid anhydrides (b) may be used alone or a plurality of types of them may be used in combination.

The aforementioned SMA resin may contain a structural unit derived from a methacrylic acid ester monomer in addition to the aromatic vinyl compound (a) and the acid anhydride (b).

Examples of the methacrylate ester include: MMA; ethyl methacrylate; propyl methacrylate; isopropyl methacrylate; n-butyl methacrylate; isobutyl methacrylate; t-butyl methacrylate; 2-ethylhexyl methacrylate; cyclohexyl methacrylate; phenyl methacrylate; benzyl methacrylate; and 1-phenylethyl methacrylate. Among these methacrylic acid esters, a methacrylic acid alkyl ester having 1 to 7 carbon atoms in the alkyl group is preferred, and MMA is particularly preferred because the SMA resin having an excellent heat resistance and transparency can be obtained. Further, a single type the methacrylic acid ester many be used alone or a plurality of types of the methacrylic acid esters may be used in combination.

The SMA resin may have a structural unit derived from monomers other than the aromatic vinyl compound (a), the acid anhydride (b) and the methacrylic acid ester. Examples of such other monomers include acrylic esters such as MA, ethyl acrylate, n-propyl acrylate, isopropyl acrylate, n-butyl acrylate, isobutyl acrylate, tert-butyl acrylate, hexyl acrylate, 2-ethylhexyl acrylate, nonyl acrylate, decyl acrylate, dodecyl acrylate, stearyl acrylate, 2-hydroxyethyl acrylate, 2-hydroxypropyl acrylate, 4-hydroxybutyl acrylate, cyclohexyl acrylate, 2-methoxyethyl acrylate, 3-methoxybutyl acrylate, trifluoromethyl acrylate, trifluoroethyl acrylate, pentafluoroethyl acrylate, glycidyl acrylate, allyl acrylate, phenyl acrylate, toluyl acrylate, benzyl acrylate, isobornyl acrylate, and 3-dimethylaminoethyl acrylate. A single type of these other monomers may be used alone or a plurality of types of them may be used in combination. The content of the structural unit derived from such other monomers in the SMA resin is preferably 10 mass% or less, more preferably 5 mass% or less, and even more preferably 2 mass% or less.

The aforementioned SMA resin is obtained by polymerizing the aforementioned aromatic vinyl compound (a), acid anhydride (b), methacrylate ester and other monomers which are optional components. The monomers to be used are mixed to prepare a monomer mixture, and the prepared monomer mixture is used for such polymerization. Polymerization is not limited to particular methods, but in view of productivity, radical polymerization is preferably performed by methods such as a bulk polymerization method and a solution polymerization method.

The Mw of the aforementioned SMA resin is preferably in the range of 40,000 to 300,000. It is more preferably in the range of 100,000 to 200,000, and particularly preferably in the range of 150,000 to 180,000. With the Mw of 40,000 or more, a stretched film is excellent in heat resistance and impact resistance, and with the Mw of 300,000 or less, a raw film for stretching has an excellent molding processability, thereby increasing productivity of a laminate according to the present invention.

<Thermoplastic resin composition (C)>

A thermoplastic resin composition (C) is a resin composition composed of the aforementioned (meth)acrylic resin (A) and thermoplastic resin (B).

In order to exhibit the effects (e.g., an increase in a shrinkage starting temperature) based on the thermoplastic

resin composition (B) contained in the thermoplastic resin composition (C) used in the present invention, the content of the thermoplastic resin composition (B) is 0.1 mass% or more but less than 50 mass%, preferably 0.3 mass% or more but less than 20 mass%, more preferably 0.5 mass% or more but less than 5 mass%, and particularly preferably 0.7 mass% or more but less than 2 mass%.

Further, in view of the balance of physical properties of the thermoplastic resin composition (C), the content of the thermoplastic resin (B) is 50 mass% or less, preferably 15 mass% or less, and more preferably 5 mass% or less. A small amount of the thermoplastic resin (B) is preferably added in order to take advantage of features of the (meth)acrylic resin such as thermal stability and transparency. For example, if the thermoplastic resin composition (C), which contains the (meth)acrylic resin (A1) and the (meth)acrylic resin (B1), contains too large an amount of the (meth)acrylic resin (B1), the thermal stability thereof during heating is reduced. If the thermoplastic resin composition (C), which contains the (meth)acrylic resin (A1) and the polycarbonate resin (B2), contains too large an amount of the polycarbonate resin (B2), the transparency thereof tends to be reduced. If the thermoplastic resin composition (C), which contains the (meth)acrylic resin (A1) and the SMA resin (B3), contains too large an amount of the SMA resin (B3), the impact resistance thereof tends to be reduced.

(Other polymers)

The (meth)acrylic resin composition according to the present invention can contain one or more types of polymers other than the (meth)acrylic resin (A) and the thermoplastic resin (B) as necessary. Note that other polymers may be added during or after polymerization for the (meth)acrylic resin (A) and/or the thermoplastic resin (B), or may be added during kneading of the (meth)acrylic resin (A) and the thermoplastic resin (B).

Examples of other polymers include: a phenoxy resin; polyolefin resins such as polyethylene, polypropylene, polybutene-1, poly-4-methylpentene-1, and polynorbornene; an ethylene ionomer; styrene resins such as polystyrene, high impact polystyrene, AS resin, ABS resin, AES resin, AAS resin, ACS resin, and MBS resin; polyester resins such as polyethylene terephthalate and polybutylene terephthalate; polyamide resins such as nylon 6, nylon 66, and polyamide elastomer; polycarbonate; polyvinyl chloride, polyvinylidene chloride, polyvinylidene fluoride, polyvinyl alcohol, polyvinyl butyral, polyvinyl acetal, polyvinyl phenol, and an ethylenevinyl alcohol copolymer; polyacetal; polyurethane; a modified polyphenylene ether and polyphenylene sulfide; a silicone modified resin; acrylic rubber, acrylic thermoplastic elastomer, and silicone rubber; styrenic thermoplastic elastomer such as SEPS, SEBS, and SIS; and olefin-based rubber such as IR, EPR, and EPDM. The amount of other polymers in the (meth)acrylic resin composition according to the present invention is, in view of transparency and the mechanical strength such as impact resistance, preferably 20 mass% or less, more preferably 15 mass% or less, and particularly preferably 10 mass% or less.

<Phenoxy resin (PR)>

A phenoxy resin (PR) is a thermoplastic polyhydroxy polyether resin. The phenoxy resin (PR) can contain 50 mass% or more of one or more types of structural units expressed by the following formula (i).

[Formula 11]

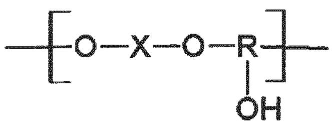

(i)

In the formula (i), X is a divalent group containing at least one benzene ring, and R is a linear or branched alkylene group having 1 to 6 carbon atoms. The structural units expressed by the formula (i) may be connected at random, alternately, or in a block.

The number of the structural units expressed by the formula (i) contained in the phenoxy resin (PR) is preferably 10 to 1,000, more preferably 15 to 500, and particularly preferably 30 to 300.

The phenoxy resin (PR) preferably does not have an epoxy group at the end because a molded article having few gel defects can be easily obtained.

The polystyrene-equivalent Mn of the phenoxy resin (PR) is preferably 3,000 to 2,000,000, more preferably 5,000 to 100,000, and particularly preferably 10,000 to 50,000. When Mn is in such a range, a (meth)acrylic resin composition having high heat resistance and high strength can be obtained.

The glass transition temperature of the phenoxy resin (PR) is preferably 80°C or higher, more preferably 90°C or higher, and particularly preferably 95°C or higher. When the glass transition temperature of the phenoxy resin (PR)

is too low, the heat resistance of the (meth)acrylic resin composition tends to be reduced. The upper limit of the glass transition temperature is preferably 150°C. When the glass transition temperature of the phenoxy resin (PR) is too high, the resultant molded article tends to be brittle.

The phenoxy resin (PR) can be obtained, for example, by a condensation reaction of a divalent phenol compound and epihalohydrin or a polyaddition reaction of a divalent phenol compound and a bifunctional epoxy resin. This reaction can be performed in the absence of a solvent or in a solvent.

Examples of the divalent phenol compound include: hydroquinone, resorcin, 4,4-dihydroxybiphenyl, 4,4'-dihydroxydiphenylketone, 2,2-bis(4-hydroxyphenyl)propane, 1,1-bis(4-hydroxyphenyl)cyclohexane, 1,1-bis(4-hydroxyphenyl)-3,3,5-trimethylcyclohexane, bis(4-hydroxyphenyl)methane, 1,1-bis(4-hydroxyphenyl)ethane, 2,2-bis(4-hydroxyphenyl)butane, 1,1-bis(4-hydroxyphenyl)-1-phenylethane, bis(4-hydroxyphenyl)diphenylmethane, 2,2-bis(4-hydroxy-3-methylphenyl)propane, 2,2-bis(3-phenyl-4-hydroxyphenyl)propane, 2,2-bis(4-hydroxy-3-tert-butylphenyl)propane, 1,3-bis(2-(4-hydroxyphenyl)propyl)benzene, 1,4-bis(2-(4-hydroxyphenyl)propyl)benzene, 2,2-bis(4-hydroxyphenyl)-1,1,1-3,3,3-hexafluoropropane, and 9,9'-bis(4-hydroxyphenyl)fluorene. Among them, 4,4-dihydroxybiphenyl, 4,4'-dihydroxydiphenylketone, 2,2-bis(4-hydroxyphenyl)propane and 9,9'-bis(4-hydroxyphenyl)fluorene are preferred in view of physical properties and cost.

Examples of the bifunctional epoxy resin include an epoxy oligomer obtained by a condensation reaction of the aforementioned divalent phenol compound and epihalohydrin. Specific examples of the bifunctional epoxy resin include: a hydroquinone diglycidyl ether, a resorcin diglycidyl ether, a bisphenol S type epoxy resin, a bisphenol A type epoxy resin, a bisphenol F type epoxy resin, a methyl hydroquinone diglycidyl ether, a chlorohydroquinone diglycidyl ether, a 4,4'-dihydroxydiphenyl oxide diglycidyl ether, a 2,6-dihydroxynaphthalene diglycidyl ether, a dichlorobisphenol A diglycidyl ether, a tetrabromobisphenol A type epoxy resin, and a 9,9'-bis(4-hydroxyphenyl) fluorene diglycidyl ether. Among them, a bisphenol A type epoxy resin, a bisphenol S type epoxy resin, a hydroquinone diglycidyl ether, a bisphenol F type epoxy resin, a tetrabromobisphenol A type epoxy resin, and a 9,9'-bis(4-hydroxyphenyl) fluorene diglycidyl ether are preferred in view of physical properties and cost.

Examples of a solvent used for manufacturing the phenoxy resin (PR) include aprotic organic solvents such as methyl ethyl ketone, dioxane, tetrahydrofuran, acetophenone, N-methyl pyrrolidone, dimethyl sulfoxide, N, N-dimethyl acetamide, and sulfolane.

Examples of a catalyst used for manufacturing the phenoxy resin (PR) include alkali metal hydroxide, a tertiary amine compound, a quaternary ammonium compound, a tertiary phosphine compound, and a quaternary phosphonium compound.

X in the formula (i) is preferably a divalent group derived from compounds expressed by the following formulas (j) to (1). Note that a position of two bonds composing a divalent group is not particularly limited if it is chemically acceptable. X in the formula (i) is preferably a divalent group having two bonds which can be formed by extracting two hydrogen atoms from benzene rings in the compounds expressed by the formulas (j) to (1). A divalent group having two bonds which can be formed by extracting one hydrogen atom from each of any two of the benzene rings in the compounds expressed by the formulas (k) to (1) is particularly preferred.

[Formula 12]

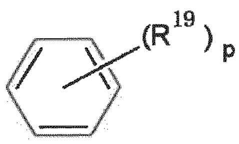

(j)

In the formula (j), $R^{19}$ is a hydrogen atom, a linear or branched alkyl group having 1 to 6 carbon atoms, or a linear or branched alkenyl group having 2 to 6 carbon atoms, p is an integer of 1 to 4.

[Formula 13]

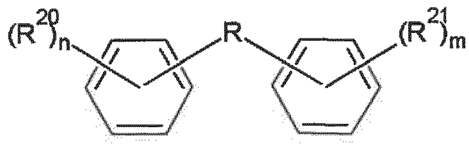

(k)

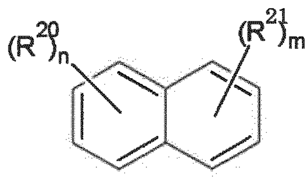

(1)

In the formula (j), $R^{19}$ is a single bond, a linear or branched alkylene group having 1 to 6 carbon atoms, a cycloalkylene group having 3 to 20 carbon atoms, or a cycloalkylidene group having 3 to 20 carbon atoms. In the formulas (k) and (1), $R^{20}$ and $R^{21}$ are each independently a hydrogen atom, a linear or branched alkyl group having 1 to 6 carbon atoms, or a linear or branched alkenyl group having 2 to 6 carbon atoms. n and m are each independently an integer of 1 to 4.

In the formula (k), X may be a divalent group derived from a compound formed by condensing a plurality of benzene rings with an alicyclic or heterocyclic ring. For example, a divalent group derived from a compound having a fluorene structure or a carbazole structure may be used.

A structural unit expressed by the formula (i) is preferably a structural unit expressed by the following formulas (m) and (n), and is more preferably a structural unit expressed by the following formula (o). A preferred form of the phenoxy resin (PR) preferably contains 10 to 1000 of such structural units.

[Formula 14]

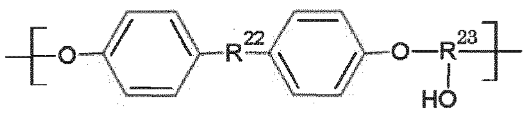

(m)

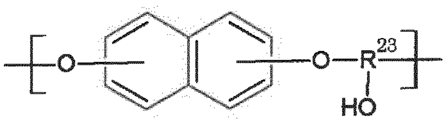

(n)

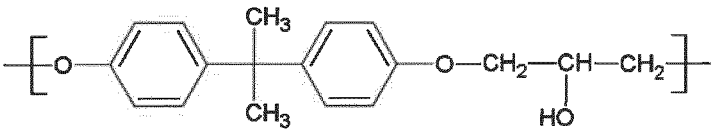

(o)

In the formula (m), $R^{22}$ is a single bond, a linear or branched alkylene group having 1 to 6 carbon atoms, a cycloalkylene group having 3 to 20 carbon atoms, or a cycloalkylidene group having 3 to 20 carbon atoms. In the formulas (m) and (n), $R^{23}$ is a linear or branched alkylene group having 1 to 6 carbon atoms.

Examples of a commercially-available phenoxy resin (PR) include YP-50 and YP-50S manufactured by NIPPON STEEL & SUMIKIN CHEMICAL CO., LTD., jER series manufactured by Mitsubishi Chemical Corporation, and PKFE and PKHJ manufactured by InChem.

(Other optional components)

The (meth)acrylic resin composition according to the present invention can contain other optional components as necessary. Examples of other optional components include various additives such as a filler, an antioxidant, a thermal degradation inhibitor, an ultraviolet absorber, a light stabilizer, a lubricant, a mold release agent, a polymer processing aid, an antistatic agent, a flame retardant, a staining pigment, a light diffusing agent, an organic pigment, a delusterant, an impact resistance modifier, and a phosphor. The total amount of these various additives is preferably 7 mass% or less, more preferably 5 mass% or less, and particularly preferably 4 mass% or less.

<Ultraviolet light absorber (LA)>

An ultraviolet light absorber (LA) having a molecular weight that is too small can cause foaming during molding of the (meth)acrylic resin composition. Thus, the molecular weight of the ultraviolet light absorber (LA) is preferably greater than 200, more preferably 300 or more, particularly preferably 500 or more, and most preferably 600 or more.

The ultraviolet absorber (LA) is a compound that has the function of converting light energy into heat energy. Examples of the ultraviolet absorber (LA) include benzophenones, benzotriazoles, triazines, benzoates, salicylates, cyanoacrylates, oxalic anilides, malonic acid esters, and formamidines. One or more types of them can be used. To effectively prevent deterioration (yellowing etc.) of a resin due to ultraviolet light, benzotriazoles (compounds having benzotriazole skeletons) and triazines (compounds having triazine skeletons) are preferred.

Examples of the benzotriazoles include 2-(2H-benzotriazol-2-yl)-4-(1,1,3,3-tetramethylbutyl)phenol (trade name: TINUVIN329, manufactured by BASF Corporation), 2-(2H-benzotriazol-2-yl)-4,6-bis(1-methyl-1-phenylethyl)phenol (trade name: TINUVIN234, manufactured by BASF Corporation), 2,2'-methylenebis[6-(2H-benzotriazol-2-yl)-4-tert-octylphenol] (LA-31, manufactured by ADEKA Corporation), and 2-(5-octylthio-2H-benzotriazol-2-yl)-6-tert-butyl-4-methylphenol.

Examples of the triazines include 2,4,6-tris(2-hydroxy-4-hexyloxy-3-methylphenyl)-1,3,5-triazine (LA-F70, manufactured by ADEKA Corporation), its analog hydroxyphenyl triazine ultraviolet absorber (CGL777, TINUVIN460, TINUVIN479, etc., manufactured by BASF Corporation), and 2,4-diphenyl-6-(2-hydroxy-4-hexyloxyphenyl)-1,3,5-triazine.

Other examples include a ultraviolet absorber having the maximum value $\varepsilon_{max}$ of the molar absorbance coefficient at a wavelength of 380 to 450 nm of equal to or less than 1,200 $dm^3 \cdot mol^{-1} cm^{-1}$. As such an ultraviolet absorber, 2-ethyl-2'-ethoxy-oxalanilide (trade name: Sanduvor VSU, manufactured by Clariant (Japan) K.K.) and the like may be used.

Other examples of the ultraviolet absorber include metal complexes having heterocyclic ligands which are disclosed in International Patent Publication Nos. WO2011/089794 and WO 2012/124395, and Japanese Unexamined Patent Application Publication Nos. 2012-012476, 2013-023461, 2013-112790, 2013-194037, 2014-62228, 2014-88542, and 2014-88543, etc. Examples of such metal complexes include a compound expressed by the following formula (p).

[Formula 15]

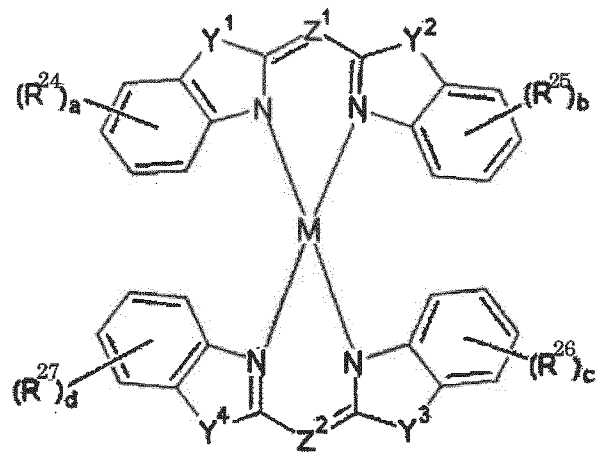

(p)

In the formula (p), M is a metal atom. $Y^1$ to $Y^4$ are each independently a divalent group other than a carbon atom (e.g., an oxygen atoms, a sulfur atoms, NH, and $NR^{28}$). $R^{28}$ is a substituent of an alkyl group, an aryl group, a heteroaryl group, a heteroaralkyl group, an arallyl group or the like. The substituent may further have a substituent. $Z^1$ and $Z^2$ are each independently a trivalent group (e.g., a nitrogen atom, CH, and $CR^{29}$). $R^{29}$ is a substituent of an alkyl group, an aryl group, a heteroaryl group, a heteroaralkyl group, an arallyl group or the like. The substituent may further have a substituent. $R^{24}$ to $R^{27}$ are each independently a substituent of a hydrogen atom, an alkyl group, a hydroxyl group, a carboxyl group, an alkoxyl group, a halogeno group, an alkylsulfonyl group, a monophorinosulfonyl group, a piperidinosulfonyl group, a thiomorpholinosulfonyl group, and a piperazinosulfonyl group or the like. The substituent may further have a substituent. a to d each indicates values of $R^{21}$ to $R^{27}$, respectively, each of which is independently an integer of 1 to 4.

Examples of the heterocyclic ligand in the metal complex include 2,2'-iminobisbenzothiazole, 2-(2-benzothiazolylamino)benzoxazole, 2-(2-benzothiazolylamino)benzimidazole, (2-benzothiazolyl)(2-benzoimidazolyl)methane,

bis(2-benzoxazolyl)methane, bis(2-benzothiazolyl)methane, bis[2-(N-substituted)benzoimidazolyl]methane, and derivatives of the above. As the central metal of the metal complex, copper, nickel, cobalt, zinc and the like are preferred. The metal complex is preferably dispersed in a medium such as a low molecular weight compound or a polymer for use. The additive amount of the metal complex is preferably 0.01 to 5 parts by mass and more preferably 0.1 to 2 parts by mass with respect to 100 parts by mass of the (meth)acrylic resin composition according to the present invention. Since the metal complex has a large molar absorbance coefficient at a wavelength of 380 to 400nm, the amount to be added to obtain a desired sufficient ultraviolet absorbing effect can be reduced. Thus, degradation of the appearance of a molded article due to bleed-out or the like can be prevented. Further, since the metal complex has a high heat resistance, it is less subject to degradation or decomposition during molding. Further, since the metal complex has a high light resistance, it is possible to maintain the ultraviolet absorbing capability for a long time.

The maximum value $\varepsilon_{max}$ of the molar absorbance coefficient of the ultraviolet absorber can be measured as follows. A 10.00mg of ultraviolet absorber is added to 1L of cyclohexane to dissolve so that nothing remains undissolved by visual observation. This solution is injected into a quartz glass cell of 1 cm×1 cm×3 cm, and the absorbance at a wavelength of 380 to 450 nm is measured using a U-3410 spectrophotometer manufactured by Hitachi, Ltd. From the molecular weight of the ultraviolet absorber (Muv) and the maximum value of the measured absorbance ($A_{max}$), the maximum value $\varepsilon_{max}$ of the molar absorbance coefficient is calculated by the following expression.

$$\varepsilon_{max}=[A_{max}/(10\times 10^{-3})]\times M_{UV}$$

<Polymer processing aid (PA)>

As a polymer processing aid (PA), polymer particles (non-crosslinked rubber particles) having a particle diameter of 0.05 to 0.5 μm which can be manufactured by an emulsion polymerization method can be used. The polymer particles may be single-layer particles composed of a polymer having a single composition and a single limiting viscosity, or may be a multilayer particles of two or more layers composed of two or more types of polymers having different compositions or limiting viscosities. In particular, two-layer particles composed of an inner polymer layer having a low limiting viscosity and an outer polymer layer having a high limiting viscosity of 5 dl/g or more are preferred. The polymeric processing aid (PA) preferably has a limiting viscosity of 3 to 6 dl/g. An improvement of moldability may be insufficient if the limiting viscosity is too low while moldability of the (meth)acrylic resin composition may be reduced if the limiting viscosity is too high. Specific examples of the polymeric processing aid include Metablen-P series manufactured by MITSUBISHI RAYON CO., LTD. and Paraloid series manufactured by The Dow Chemical Company. An amount of the polymer processing aid (PA) is preferably 0.1 to 5 parts by mass with respect to 100 parts by mass of the total amount of the (meth)acrylic resin (A) and the thermoplastic resin (B). Processing characteristics cannot be satisfactorily achieved if the blending amount is too small while the appearance of the molded article may be degraded if the blending amount is too large.

<Other Additives>

Examples of fillers include calcium carbonate, talc, carbon black, titanium oxide, silica, clay, barium sulfate, and magnesium carbonate. The amount of the filler in the (meth)acrylate resin composition according to the present invention is preferably 3 mass% or less and more preferably 1.5 mass% or less.

Examples of antioxidants include a phosphorus-based antioxidant, a hindered phenol-based antioxidant, and a thioether-based antioxidant. One or more types of antioxidants can be used. Among them, use of a phosphorus-based antioxidant and a hindered phenol-based antioxidant is preferred, and a combined use of a phosphorus-based antioxidant and a hindered phenol-based antioxidant is more preferred in order to prevent degradation of optical properties due to coloring. When a phosphorus-based antioxidant and a hindered phenol-based antioxidant are used in combination, the mass ratio of the phosphorus-based antioxidant and the hindered phenol-based antioxidant is preferably 1:5 to 2:1 and more preferably 1:2 to 1:1.

Examples of the phosphorus-based antioxidant include 2,2-methylenebis(4,6-di-t-butylphenyl)octyl phosphite (trade name: ADK STAB HP-10, manufactured by ADEKA Corporation), tris(2,4-di-t-butylphenyl)phosphite (trade name: IRGAFOS168, manufactured by BASF Corporation), and 3,9-bis(2,6-di-tert-butyl-4-methylphenoxy)-2,4,8,10-tetraoxa-3,9-diphosphaspiro[5.5]undecane (trade name: ADK STAB PEP-36, manufactured by ADEKA Corporation).

Examples of the hindered phenol-based antioxidant include pentaerythrityl-tetrakis[3-(3,5-di-t-butyl-4-hydroxyphenyl)propionate] (trade name: IRGANOX1010, manufactured by BASF Corporation), and octadecyl-3-(3,5-di-t-butyl-4-hydroxyphenyl)propionate (trade name: IRGANOX1076, manufactured by BASF Corporation).

A thermal degradation inhibitor can prevent thermal degradation of a resin by trapping polymer radicals generated when exposed to high heat substantially in the absence of oxygen. Examples of the thermal degradation inhibitor include 2-t-butyl-6-(3'-t-butyl-5'-methylhydroxybenzyl)-4-methylphenylacrylate (trade name: Sumilizer GM, manufactured by Sumitomo Chemical Co., Ltd.), 2,4-di-t-amyl-6-(3',5'-di-t-amyl-2'-hydroxy-α-methylbenzyl)phenylacrylate (trade name: Sumilizer GS, manufactured by Sumitomo Chemical Co., Ltd.).

A light stabilizer is a compound that has the function of trapping radicals generated by oxidation with light. Examples of the light stabilizer include hindered amines such as compounds having a 2,2,6,6-tetraalkylpiperidine skeleton.

Examples of a lubricant include stearic acid, behenic acid, stearamide acid, methylene bis-stearamide, hydroxystearic acid triglyceride, paraffin wax, ketone wax, octyl alcohol, hydrogenated oil.

Examples of a release agent include: higher alcohols such as cetyl alcohol and stearyl alcohol; and glycerin higher fatty acid esters such as monoglyceride stearate and diglyceride stearate. A higher alcohol and a glycerin fatty acid monoester are preferably used in combination. The mass ratio of a higher alcohol and a glycerin fatty acid monoester is preferably 2.5/1 to 3.5/1 and more preferably 2.8/1 to 3.2/1.

As an organic pigment, a compound transforming ultraviolet light into visible light is preferably used.

Examples of a light diffusing agent and a delusterant include glass particles, polysiloxane crosslinked fine particles, crosslinked polymer particles, talc, calcium carbonate, and barium sulfate.

Examples of a phosphor include a fluorescent pigment, a fluorescent dye, a fluorescent white dye, a fluorescent brightening agent, and a fluorescent bleach.

(Raw film)

There are no particular limitations on a method for manufacturing a raw film. The raw film can be formed by a melt film-forming method or a solution film-forming method and is preferably formed by a melt film-forming method in view of productivity. Examples of the melt film-forming method include an inflation method, a T-die method, a calender method and a cutting method, and the T-die method can be particularly, preferably adopted. For the melt film-forming method, for example, an extruder-type melt extrusion apparatus having a single or twin extrusion screws can be used. A melt extrusion temperature is preferably 150 to 350°C, more preferably 200 to 300°C, and particularly preferably 230 to 270°C. Further, when melt-kneading is performed by using a melt-extrusion apparatus, it is preferred that the melt-kneading be performed, in order to prevent coloring, using a vent under reduced pressure or under a nitrogen stream. Further, it is preferred that a polymer filter be installed for manufacturing in order to remove foreign matters. Further, it is preferred that a gear pump be installed for manufacturing in order to achieve a high thickness accuracy.

A film obtained by the aforementioned manufacturing method is a raw film.

Further, when the raw film satisfies physical properties according to the present invention without stretching, the raw film serves as an acrylic resin film. An acrylic resin film may be obtained by satisfying physical properties according to the present invention using means other than stretching by heat treatment, energy ray irradiation and the like.

A process of manufacturing a raw film and a process of biaxially stretching the raw film may be conducted either continuously or discontinuously.

A thickness of a raw film is not limited to particular values, and is for example, preferably 10 to 500 μm.

A thickness distribution of the film is usually within ±10%, preferably within ±5%, more preferably within ± 3% with respect to the average value. When stretching processing is performed, the film having the thickness distribution of ±10% or greater is likely to have an uneven thickness because stress is concentrated on a part where the film thickness is small.

The raw film may contain other functional layers and the like as long as the effect according to the present invention is produced. For example, an adhesive layer, a hard coat layer, an antireflective layer, an easily adhesive layer and the like may be contained.

(Stretched film)

The above-described raw film is used for the biaxially stretched film according to the present invention.

Stretching processing can increase heat resistance, mechanical strength and the like of the film. There are no limitations on a stretching method in the stretching process, and for example, sequential biaxial stretching, simultaneous biaxial stretching, and tubular stretching may be used.

The stretching processing includes a preheating process, a stretching process and a heat-setting process, and relaxation process may be performed after the heat-setting process.

In the case of the sequential biaxial stretching, the stretching speed of each stretching direction may be the same as or different from each other, preferably 100 to 5,000%/min, more preferably 100 to 3,000%/min, and particularly preferably 500 to 1,000%/min. Further, in the case of the simultaneous biaxial stretching, the more stretching speed is increased, the more breakage is likely to occur, and thus productivity is significantly reduced. Therefore, the stretching speed is preferably 50 to 5,000%/min, and more preferably 100 to 3,000%/min.

In the sequential and simultaneous biaxial stretching method, a stretching temperature is, based on the glass

transition temperature (Tc) of the thermoplastic resin composition (C) used in the present invention, preferably Tc to ($T_C$+40°C), more preferably ($T_C$+5°C) to ($T_C$+35°C), even more preferably ($T_C$+10°C) to (Tc+35°C), and particularly preferably (Tc+15°C) to (Tc+ 25°C). When the stretching temperature is lower than the above ranges, the film is broken and cannot be stretched, while when it is higher than the above ranges, mechanical strength and heat resistance of the film do not increase if stretching is performed.

A stretching magnification is preferably 1.01 to 12.25 times at an area magnification indicating an area ratio of the raw film to the stretched film, more preferably 1.10 to 9 times, even more preferably 2 to 6 times, and particularly preferably 3 to 5 times. When the area magnification is 1.01 times or less, toughness of the film may not increase, while when it is 12.25 times or more, mechanical strength of the film may be significantly reduced.

The heat-setting process is performed by keeping the film biaxially stretched as described above under the condition of a predetermined temperature range for a predetermined time within a fixed temperature range while both ends in at least one direction of the film are restrained, thereby achieving the effect of increasing heat resistance and mechanical strength of the film. The temperatures used in the heat-setting process are, based on the glass transition temperature $T_C$ of the thermoplastic resin composition (C), a temperature of ($T_C$-25°C) or higher but less than Tc, preferably a temperature of ($T_C$-20°C) or higher but less than Tc, more preferably a temperature of (Tc-15°C) or higher but less than Tc, and particularly preferably a temperature of ($T_C$-10°C) or higher but less than (Tc-2°C). The heat-setting process performed in the temperature ranges can control the orientation state and the relaxation state of each component composing the resin composition (C), thereby obtaining a film having a high shrinkage starting temperature, a low linear expansion coefficient and impact resistance. Further, when the content ratio of ingredients is set to be a low content ratio so that it can be effective, almost no blending effect is exhibited. By performing the aforementioned control, however, it is possible to satisfy the aforementioned physical properties even when the content ratio of the thermoplastic resin (B) is set to be a low content ratio which is not expected to be generally effective. When the heat-setting temperature is lower than ($T_C$-25°C), the shrinkage starting temperature tends to be significantly reduced. When the heat-setting temperature is $T_C$ or higher, the linear expansion coefficient tends to increase. Further, depending on the composition of the thermoplastic resin composition (C), the impact resistance may be reduced.

Although the aforementioned predetermined time varies with a raw film thickness, a stretching magnification, a stretching temperature, and a stretching speed of the thermoplastic resin composition (C), it is a time longer than the time during which stress of the film is reduced and becomes constant. The measurement of the stress is preferably detected by a stress measuring apparatus installed in a jig for restraining the film. The predetermined time may be determined based on the result of the stress detection during manufacturing, or may be set to a time determined based on the result of the stress detection in which a separate stretching test was performed in advance.

Although an investigation regarding what mechanism exhibits functions in the heat-setting process of the present invention has diligently been conducted, it is expected to be the following mechanism.

In the stretching process, the (meth)acrylic resin (A) and the thermoplastic resin (B) are cooperatively molecularly orientated. When the heat -setting temperature is higher than Tc, both components cooperatively relax. When the heat-setting temperature is lower than ($T_C$-25)°C, neither component sufficiently relaxes. When the heat-setting is performed at a temperature range of ($T_C$-25)°C or higher but less than $T_C$°C according to the present invention, only the (meth)acrylic resin (A) relaxes independently and the effect of increasing the shrinkage starting temperature is exhibited. Further, since the thermoplastic resin (B) is in a non-relaxed state, the effect of reducing the linear expansion coefficient is exhibited.

The relaxation process is a process of reducing a film width under a predetermined temperature environment while both ends in at least one direction of the film are restrained. It is preferred that the predetermined temperature environment is higher than the temperature in the heat-setting process and less than the glass transition temperature $T_B$ of the thermoplastic resin (B).

A longitudinal and/or horizontal relaxation processing may be applied simultaneously with or after the heat treatment. However, the upper limit temperature in the relaxation process is the glass transition temperature $T_B$ of the thermoplastic resin (B).

In the film according to the present invention, a haze at a thickness of 100 $\mu$m is preferably 2.0% or less and more preferably 1.0% or less. This enhances transparency.

In order to prevent tearing due to conveyance during manufacturing of the stretched film and tearing during decorative molding, a tear strength of the film according to the present invention is preferably 1.5 gf ($1.47\times10^{-2}$N) or more, more preferably 1.6 gf ($1.57\times10^{-2}$N) or more, even more preferably 1.8 gf ($1.77\times10^{-2}$N) or more, and particularly preferably 2.0 gf ($1.96\times10^{-2}$N) or more,

The film according to the present invention can be used for a polarizer protective film, a decorative film and the like, and may contain an adhesive layer, a hard coat layer, an antireflection layer and the like. The layer may be extended after being provided on the raw film, and may be provided on the stretched film by a method such as coating.

**[Examples]**

In the following description, examples according to the present invention and comparative examples will be described. The present invention is not limited, however, to the following examples.

[Evaluation Items and Evaluation Methods]

The evaluation items and the evaluation methods are as follows.

(Polymerization conversion rate)

Inert CAP 1 (df=0.4 μm, I.D.=0.25 mm, length=60 m) manufactured by GL Sciences Inc. was connected to a gas chromatograph GC-14A manufactured by Shimadzu Corporation as a column. The injection temperature was 180°C and the detector temperature was 180°C. The column temperature had a temperature profile in which the temperature was kept at 60°C for five minutes, then raised from 60°C to 200°C at a temperature raising rate of 10°C/min, and kept at 200°C for ten minutes. The measurement was performed under these conditions and the polymerization conversion rate was calculated based on the obtained result.

(Weight Average Molecular Weight (Mw), Molecular Weight Distribution (Mw/Mn))

4 mg of a resin to be measured was dissolved in 5 ml of tetrahydrofuran (THF), which was then passed through a filter having a pore size of 0.1 μm to obtain a sample solution. As a GPC apparatus, "HLC-8320" manufactured by Tosoh Corporation and provided with a differential refractive index detector (RI detector) was used. As a column, one in which two "TSKgel Super Multipore HZM-M" and one "Super HZ4000", each manufactured by Tosoh Corporation, were connected in series was used. Tetrahydrofuran (THF) was used as an eluant. The temperature of a column oven was set at 40°C, 20 μl of the sample solution was introduced into the apparatus at an eluate flow rate of 0.35 ml/min, and the chromatogram was measured. The chromatogram is a chart in which an electrical signal value (intensity Y) derived from a refractive index difference between the sample solution and a reference solution is plotted with respect to retention time X.

The GPC measurement was carried out with the use of 10 pieces of standard polystyrenes with a molecular weight in a range of 400 to 5,000,000, and a calibration curve indicating the relationship between the retention time and the molecular weight was created. On the basis of this calibration curve, Mw and Mw/Mn of the resin to be measured were determined. Note that the baseline of the chromatogram was served by a line connecting a point at which the slope of a peak on a higher molecular weight side in the GPC chart changed from zero to positive as viewed in a direction in which the retention time progressed and a point at which the slope of a peak on a lower molecular weight side changed from negative to zero as viewed in a direction in which the retention time progressed. When the chromatogram indicated a plurality of peaks, the baseline was served by a line connecting a point at which the slope of the peak on the highest molecular weight side changed from zero to positive and a point at which the slope of the peak on the lowest molecular weight side changed from negative to zero.

(Triad Syndiotacticity (rr))

The $^1$H-NMR measurement was performed on the resin to be measured. A nuclear magnetic resonance apparatus ("ULTRA SHIELD 400 PLUS" manufactured by Bruker Corporation) was used as a measurement apparatus. For 10 mg of a sample, 1 mL of deuterated chloroform was used as a deuterated solvent. The measurement temperature was room temperature (20 to 25°C), and a total of 64 measurements were performed. The area (X) of the region of 0.6 to 0.95 ppm and the area (Y) of the region of 0.6 to 1.35 ppm, where the reference substance (TMS) was set at 0 ppm, were measured, and a value calculated by the expression: (X/Y)×100 was set at the triad syndiotacticity (rr) (%).

(Glass Transition Temperature)

The glass transition temperature was measured in accordance with JIS K7121. A DSC curve was measured under conditions that the temperature of the sample was once raised to 230°C, then cooled to the room temperature, and then again raised from the room temperature to 230°C at a temperature raising rate of 10°C /min using a differential scanning calorimetry equipment ("DSC-50" manufactured by Shimadzu Corporation). A midpoint glass transition temperature obtained from the resultant DSC curve was set at the glass transition temperature.

(Haze)

A haze of the film was measured using a haze meter (HM-150 manufactured by Murakami Color Research Laboratory) in accordance with JIS K7136.

(Total light transmittance)

A total light transmittance of the film was measured using the haze meter (HM-150 manufactured by Murakami Color Research Laboratory) in accordance with JIS K7361-1.

(Linear thermal expansion coefficient)

A test piece of 4 mm (width)×20 mm (length)×40 μm (thickness) was cut out from the biaxially stretched film. A thermomechanical analyzer TMA ("Q400EM" manufactured by TA Instruments) was used as a measurement device. The temperature of the test piece was raised from 25°C to 130°C at a temperature raising rate of 10°C/min under the condition of a distance between chucks of 8 mm and a load of 0.01 N to measure the amount of dimensional change thereof. A linear thermal expansion coefficient was calculated from the slope of the amount of dimensional change in the temperature range of 50 to 90°C.

(Shrinkage starting temperature)

A test piece of 4 mm (width)×20 mm (length)×40 μm (thickness) was cut out from the biaxially stretched film. A thermomechanical analyzer TMA ("Q400EM" manufactured by TA Instruments) was used as a measurement device. The temperature of the test piece was raised from 25°C to 130°C at a temperature raising rate of 10°C/min under the condition of a distance between chucks of 8 mm and a load of 0.01 N to measure the amount of dimensional change thereof. The temperature at which the amount of film elongation becomes maximum was set at a shrinkage starting temperature.

(Tear strength)

A test piece of 25 mm (width)×120 mm (length) was cut out from the biaxially stretched film with reference to JIS K7128-1 and a cut of 60 mm was made in the length direction thereof from the center point of a side in the width direction thereof. AG-2000B (manufactured by Shimadzu Corporation) is used, and a distance between the upper and lower sides of the chuck jig was set to 100 mm. The side where the cut was made was fixed to the upper chuck jig, and the other side was fixed to the lower chuck jig. A measured value obtained when tensile measurement was made under the condition of a tensile speed of 300 mm/min and a tensile distance of 100 mm was set to a tear strength.

(Impact resistance strength)

A test piece of 80 mm×80 mm× 40 μm (thickness) was cut out from the biaxially stretched film. A film impact tester (manufactured by YASUDA SEIKI SEISAKUSHO, LTD.) was used to measure an impact resistance value when the test piece was broken by a sphere having a diameter of 12.7±0.2 mmφ.

(Impact resistance test for molded article)

Acrylic coating liquid (manufactured by Seiko advance Ltd., one-liquid evaporative drying type ink 2500 series, diluting solvent T-2500) was applied to one surface of the biaxially stretched film by screen printing so that the thickness of the biaxially stretched film becomes about 20 μm. Then the biaxially stretched film was dried at 80°C for 10 minutes using a hot-air generator to obtain a decorative film.

Adhesive obtained by mixing polyether urethane resin ("DICDRY AS-106A" manufactured by DIC Corporation) and curing agent ("LR-100" manufactured by DIC Corporation) was applied onto the surface of the resin substrate composed of an ABS resin (acrylonitrile-butadiene-styrene copolymer resin). The above decorative film was positioned thereon and was bonded thereto using a hand roller.

The resultant laminated molded article of 80 mm×80 mm was used and set to have 1.5 J of an impact measurement capacity when a sphere having a diameter of 12.7±0.2 mmφ was used. Then, an impact was applied to the test piece using a film impact tester (manufactured by Yasuda Seiki Co., Ltd.).

The evaluation was conducted under the following criteria.

Good: The stretched film on the surface was not broken.
Poor: The stretched film on the surface was broken.

(High temperature environment test)

A test piece similar to that used in the impact resistance test for the molded article was left under the high temperature environment of 105°C for 500 hours. The appearance of the test piece left for 500 hours was visually evaluated.

Good: No warpage was observed on the test piece.
Poor: A curved warpage occurred in the test piece.

(Manufacturing example 1) (Manufacturing of (meth)acrylic resin (A1-1))

The inside of an autoclave to which an agitator and a sampling tube are attached was substituted with nitrogen. Then, 100 parts by mass of purified MMA, 0.0054 parts by mass of 2,2'-azobis(2-methylpropionitrile (hydrogen abstraction ability: 1%, one-hour half-life temperature: 83°C), and 0.200 parts by mass of n-octyl mercaptan were poured and the resultant solution was stirred to obtain a raw material solution. Nitrogen was delivered into the raw material solution and the dissolved oxygen was removed.
The raw material solution was poured into a tank reactor connected to the autoclave by a pipe up to 2/3 of the volume. The polymerization reaction was started first by a batch method in a state in which the temperature was maintained at 140°C. When the polymerization conversion rate reached 55 mass%, the raw material solution was supplied from the autoclave to the tank reactor at a flow rate in which the average residence time becomes 150 minutes while maintaining the temperature at 140°C, and at the same time, the polymerization reaction of the batch method was switched to the polymerization reaction of the continuous flow type in which the reaction solution was extracted from the tank reactor at a flow rate corresponding to the supply flow rate of the raw material solution. After switching, the polarization conversion rate in the steady state was 48 mass%.
The reaction liquid that was removed from the tank reactor which has been in the steady state was supplied to a multitubular heat exchanger having an inner temperature of 230°C at a flow rate in which the average residence time was two minutes and then heated. Then, the heated reaction liquid was introduced into a flash evaporator and volatile matter mainly composed of an unreacted monomer was removed to obtain a molten resin. The molten resin from which the volatile matter was removed was supplied to a twin-screw extruder with the inner temperature of 260°C and discharged in a strand shape, then cut by a pelletizer to obtain a (meth)acrylic resin (A1-1) in the form of pellets.
The (meth)acrylic resin (A1-1) had a Mw of 112,000, a melt viscosity $\eta$ of 1,000 Pa·s, an Mw/Mn of 1.86, a syndiotacticity (rr) of 52% and a glass transition temperature of 120°C, and the content of the MMA monomer unit was 100 mass% (polymethyl methacrylate (PMMA)).

(Manufacturing example 2) (Manufacturing of (meth)acrylic resin (B1-1 or A1-2))

The inside of an autoclave to which an agitating blade and a three-way cock are attached was substituted with nitrogen. Then, 1,600 kg of toluene, 80 kg of 1,2-dimethoxyethane, 73.3 kg (42.3 mol) of toluene solution containing isobutylbis (2, 6-di-t-butyl-4-methylphenoxy)aluminum with a concentration of 0.45 M, and 8.44 kg (14.1 mmol) of a solution (solvent: 95 mass% of cyclohexane, 5 mass% of n-hexane) containing sec-butyllithium with a concentration of 1.3 M were charged thereinto under the room temperature. After that, 550 kg of MMA purified by distillation was dropwise added thereto at 15°C for 30 minutes while being stirred. After completion of the dropwise addition, the resultant solution was stirred at 15°C for 90 minutes. The color of the solution was changed from yellow to colorless. The polymerization conversion rate of MMA at this time was 100%. 1,500 kg of toluene was added to the resultant solution to dilute it. Then, the dilution was poured into a large volume of methanol to obtain a precipitate. The resultant precipitate was dried at 80°C and 140 Pa for 24 hours to obtain a (meth)acrylic resin (B1-1 or A1-2).
The (meth)acrylic resin (B1-1 or A1-2) had a Mw of 70,000, a melt viscosity $\eta$ of 1,200 Pa·s, an Mw/Mn of 1.06, a syndiotacticity (rr) of 75% and a glass transition temperature of 132°C, and the content of the MMA monomer unit was 100 mass% (polymethyl methacrylate (PMMA)).

(Polycarbonate resin (B2))

The following polycarbonate resins (B2) were prepared.

(B2-1): "SD POLYCA TR-2201", MVR (measured at 300°C and a load of 1.2 kg for 10 minutes according to JIS

K7210)=210 $cm^3$/10 min, Mw=22,000, Mw/Mn=2.0, glass transition temperature of 141°C, manufactured by Sumika Styron Polycarbonate Limited.
(B2-2): "Calibre 301-40 (product number)", MVR (measured at 300°C and a load of 1.2 Kg 10 minutes according to JIS K7210)=40 $cm^3$/10 min, Mw=35,000, Mw/Mn=2.0, glass transition temperature of 148°C, manufactured by Sumika Styron Polycarbonate Limited.
(B2-3): "SD POLYCA TR-2001", MVR (measured at 300°C and a load of 1.2 Kg 10 minutes according to JIS K7210)=200 $cm^3$/10 min, Mw=22,100, Mw/Mn=1.8, glass transition temperature of 141°C, manufactured by Sumika Styron Polycarbonate Limited.

(SMA resin (B3-1))

The following SMA resin was prepared.
(B3-1): "Rescify R-200", Mw=166,000, glass transition temperature of 138°C, manufactured by Denka Company Limited.

(Phenoxy resin (PR))

The following phenoxy resin was prepared.
(PR-1): "YP-50S (product number)", Mw=35,000, Mw/Mn=2.0, glass transition temperature of 96°C, manufactured by NIPPON STEEL & SUMIKIN CHEMICAL CO., LTD.

(Polymer processing aid (PA))

The following polymer processing aids (PA) were prepared.

(PA-1): "Metabrene P550A" (average degree of polymerization: 7,734, content of MMA monomer unit: 88 mass%, content of butyl acrylate monomer unit: 12 mass%), manufactured by MITSUBISHI RAYON CO., LTD.
(PA-2): "Paraloid K125P" (average degree of polymerization: 19,874, content of MMA monomer unit: 79 mass%, content of butyl acrylate monomer unit: 21 mass%), manufactured by KUREHA CORPORATION.

(Example 1)

90 parts by mass of a (meth)acrylic resin (A1-1), 10 parts by mass of a (meth)acrylic resin (B2-1) and 2 parts by mass of a polymer processing aid (PA-1) were mixed, and using an twin-screw extruder ("KZW20TW-45MG-NH-600" manufactured by TECHNOVEL CORPORATION), the resultant mixture was melt-kneaded at 250°C and the resultant melt-kneaded matter was extruded, whereby a thermoplastic resin composition (C1) was manufactured. Physical properties of the thermoplastic resin composition (C1) were evaluated. Table 1 shows the compositions of the thermoplastic resin composition (C1) and the results of the evaluation.
The resultant thermoplastic resin composition (C1) was dried at 80°C for 12 hours. Using a 20 mmφ single-screw extruder (manufactured by OCS GmbH), at a resin temperature of 260°C, the thermoplastic resin composition (C1) was extruded from a T-die and taken up by a roll having a surface temperature of 100°C to obtain a raw film having a width of 120 mm and a thickness of 160 μm. Table 1 shows the results of the evaluation.
A part of the resultant film having a size of 100 mmm×100 mm was cut out therefrom. Biaxial stretching was performed on this film using a two-tank batch biaxial stretching tester. In a first tank, simultaneous biaxial stretching was performed on the film under the conditions of a stretching temperature of 135°C, a stretching speed of 860%/min, and a stretching magnification of 2×2, and in a second tank, subsequently, heat-setting was performed on the film at a heat-setting temperature of 115°C for 90 seconds, and then the film was rapidly cooled to obtain a stretched film (F1) having a thickness of 40 μm. Table 1 shows the stretching conditions and the results of the evaluation of the biaxially stretched film.

(Examples 2 to 9)

Examples 2 to 9 were each evaluated by obtaining thermoplastic resin compositions (C2) to (C9) and biaxially stretched films (F2) to (F9) in the same manner as that in Example 1 except that the compositions and stretching conditions were changed. Table 1 shows the compositions, the stretching conditions and the results of the evaluation. Note that in Example 3, a mixture composed of 78 parts by mass of A1-1 and 19.5 parts by mass of A1-2 (equivalent to B1-1) is regarded as a (meth)acrylic resin (A1). The glass transition temperature of this mixture was 122°C.

[Table 1]

| | | Example 1 | Example 2 | Example 3 | Example 4 | Example 5 | Example 6 | Example 7 | Example 8 | Example 9 |
|---|---|---|---|---|---|---|---|---|---|---|
| (Meth)acrylic resin (A1-1) | mass% | 90 | 60 | 78 | 99.1 | 97.5 | 99.1 | 97.5 | 90 | 96.5 |
| (Meth)acrylic resin (B1-1=A1-2) | mass% | 10 | 40 | 19.5 | | | | | | |
| Polycarbonate resin (B2-1) | mass% | | | 2.5 | 0.9 | 2.5 | | | | |
| Polycarbonate resin (B2-2) | mass% | | | | | | 0.9 | | | 0.8 |
| SMA resin (B3-1) | mass% | | | | | | | 2.5 | 10 | |
| Phenoxy resin (PR-1) | mass% | | | | | | | | | 2.7 |
| Polymer processing aid (PA-1) | phr | 2 | 2 | 2 | 2 | 2 | 2 | 2 | 2 | 2 |
| Resin composition | | [C1] | [C2] | [C3] | [C4] | [C5] | [C6] | [C7] | [C8] | [C9] |
| Glass transition temperature | °C | 121 | 123 | 122 | 120 | 120 | 120 | 121 | 121 | 121 |
| Ealuation result of raw film | | | | | | | | | | |
| Total light transmittance | % | 92 | 92 | 92 | 92 | 92 | 92 | 92 | 92 | 92 |
| Haze | % | 0.5 | 0.5 | 0.5 | 0.5 | 0.5 | 0.5 | 0.5 | 0.5 | 0.5 |
| Stretching processing condition | | | | | | | | | | |
| Stretching temperature | °C | 135 | 145 | 142 | 140 | 140 | 140 | 140 | 140 | 140 |
| Heat-setting temperature | °C | 115 | 115 | 112 | 115 | 115 | 115 | 115 | 115 | 110 |
| Evaluation result of stretched film | | [F1] | [F2] | [F3] | [F4] | [F5] | [F6] | [F7] | [F8] | [F9] |
| Shrinkage starting temperature | °C | 117 | 114 | 116 | 118 | 114 | 119 | 118 | 118 | 115 |
| Linear expansion coefficient | ppm/°C | 57 | 53 | 56 | 57 | 55 | 57 | 54 | 56 | 58 |
| Tear strength | gf | 1.9 | 1.5 | 2.0 | 1.9 | 2.1 | 1.9 | 1.8 | 2.2 | 1.9 |
| Impact reistance strength | J/mmt | 5.9 | 6.0 | 6.1 | 4.8 | 5.0 | 4.7 | 5.0 | 5.5 | 5.2 |
| Evaluation result of molded article | | | | | | | | | | |
| Impact resistance test | | - | - | - | - | Good | - | - | - | - |
| High temperature environment test | | - | - | - | - | Good | - | - | - | - |

(Comparative Examples 1 to 10)

Comparative Examples 1 to 10 were each evaluated by obtaining thermoplastic resin compositions (C1), (C5), (C8), (C10) and (C11) and biaxially stretched films (F10) to (F19) in the same manner as that in Example 1 except that the compositions and stretching conditions were changed. Table 2 shows the compositions, the stretching conditions and the results of the evaluation.

(Comparative Example 11)

42 parts by mass of a (meth)acrylic resin (A1-1), 58 parts by mass of a (meth)acrylic resin (B1-1) and 2 parts by mass of a polymer processing aid (PA-2) were mixed, and using an twin-screw extruder ("KZW20TW-45MG-NH-600" manufactured by TECHNOVEL CORPORATION), the resultant mixture was melt-kneaded at 250°C and the resultant melt-kneaded matter was extruded, whereby a thermoplastic resin composition (C12) was manufactured. Physical properties of the thermoplastic resin composition (C12) were evaluated. Table 2 shows the compositions of the thermoplastic resin composition (C12) and the results of the evaluation.

The resultant thermoplastic resin composition (C12) was dried at 80°C for 12 hours and then supplied to a 20 mmφ single-screw extruder (manufactured by OCS GmbH). The thermoplastic resin composition was melt-kneaded at a cylinder temperature of 260°C, and then extruded from a T-die and taken up by a roll having a surface temperature of 100°C to obtain a raw film having a width of 500 mm and a thickness of 160 μm. Table 2 shows the results of the evaluation.

(Comparative Example 12)

99.1 parts by mass of a (meth)acrylic resin (A1-1), 0.9 parts by mass of a polycarbonate resin (B2-1) and 2 parts by mass of a polymer processing aid (PA-1) were mixed, and using an twin-screw extruder ("KZW20TW-45MG-NH-600" manufactured by TECHNOVEL CORPORATION), the resultant mixture was melt-kneaded at 250°C and the resultant melt-kneaded matter was extruded, whereby a thermoplastic resin composition (C4) was manufactured. Physical properties of the thermoplastic resin composition (C4) were evaluated. Table 2 shows the compositions of the thermoplastic resin composition (C4) and the results of the evaluation.

The resultant thermoplastic resin composition (C4) was dried at 80°C for 12 hours and then supplied to a 20 mmφ single-screw extruder (manufactured by OCS GmbH). The thermoplastic resin composition was melt-kneaded at a cylinder temperature of 260°C, and then extruded from a T-die and taken up by a roll having a surface temperature of 100°C to obtain a raw film having a width of 500 mm and a thickness of 160 μm. Table 2 shows the results of the evaluation.

The resultant raw film was successively supplied to a tenter-type simultaneous biaxial stretching machine at a conveyance speed of 2 m/min. This biaxial stretching machine executes the following processes (I) to (V) in an air circulation type drying oven.

The both of the end parts of the raw film in the width direction were held by the pair of tenter clamps and then preheated to 160°C (process (I)).

Each of the tenter clamps includes a pantograph that can extract and retract and runs along one of the end parts of the film in the width direction and a plurality of clips that are provided in the pantograph and hold one of the end parts of the film.

Next, the pair of tenter clamps were operated while heating the film to 160°C to stretch the film simultaneously 2.1 times in the longitudinal direction and 2.1 times in the width direction (process (II)). In this process, both the stretching speed in the longitudinal direction and the stretching speed in the width direction were 1,000%/min.

Next, the film was cooled to 130°C (process (III)).

Next, by operating the pair of tenter clamps, the film was relaxed both in the longitudinal direction and the width direction with the relaxation rate of 5% while heating the film to 135°C in such a way that the stretching magnification in the longitudinal direction after the relaxation becomes twice and the stretching magnification in the width direction after the relaxation becomes twice (process (IV)). The relaxation speed in the longitudinal direction and the relaxation speed in the width direction were both 80%/min.

Next, the film was cooled to 70°C and was solidified (process (V)).

At the outlet of the stretching machine, both of the end parts of the film held by the pair of tenter clamps were released while conveying the film at a conveyance speed of 4 m/min.

Next, both of the end parts of the film in the width direction where marks of the clips are left were removed by a shear cutter (process (VI), trimming process).

Last, the film was wound on a resin core in a roll shape at a winding-up tension of 90 N/m (process (VII)) to obtain a stretched film (F20). Table 2 shows the results of the evaluation.

[Table 2]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| (Meth)acrylic resin (A1-1) | mass% | 100 | 100 | 100 | 90 | 90 | 97.5 | 97.5 |
| (Meth) acrylic resin (B1-1 = A1-2) | mass% | | | | 10 | 10 | | |
| Polycarbonate resin (B2-1) | mass% | | | | | | 2.5 | 2.5 |
| Polycarbonate resin (B2-3) | mass% | | | | | | | |
| SMA resin (B3-1) | mass% | | | | | | | |
| Polymer processing aid (PA-1) | phr | 2 | 2 | 2 | 2 | 2 | 2 | 2 |
| Polymer processing aid (PA-2) | phr | | | | | | | |
| Resin composition | | [C10] | [C10] | [C10] | [C1] | [C1] | [C5] | [C5] |
| Glass transition temperature | °C | 120 | 120 | 120 | 121 | 121 | 120 | 120 |
| Evaluation result of raw film | | | | | | | | |
| Total light transmittance | % | 92 | 92 | 92 | 92 | 92 | 92 | 92 |
| Haze | % | 0.4 | 0.4 | 0.4 | 0.4 | 0.4 | 0.4 | 0.4 |
| Tear strength | gf | - | - | - | - | - | - | - |
| Impact resistance test | J/mmt | - | - | - | - | - | - | - |
| Stretching processing condition | | | | | | | | |
| Stretching temperature | °C | 140 | 140 | 140 | 140 | 140 | 140 | 140 |
| Heat-setting temperature | °C | 115 | 30 | 140 | 30 | 140 | 30 | 85 |
| Relaxation temperature | °C | - | - | - | - | - | - | - |
| Relaxation rate | % | - | - | - | - | - | - | - |
| Evaluation result of stretched film | | [F10] | [F11] | [F12] | [F13] | [F14] | [F15] | [F16] |
| Shrinkage starting temperature | °C | 116 | 101 | 107 | 101 | 108 | 102 | 104 |
| Linear expansion coefficient | ppm/°C | 64 | 56 | 63 | 52 | 65 | 57 | 59 |
| Total light transmittance | % | 92 | 92 | 92 | 92 | 92 | 92 | 92 |
| Haze | % | 0.2 | 0.2 | 0.2 | 0.2 | 0.2 | 0.2 | 0.2 |
| Tear strength | gf | 2.3 | 1.0 | 1.9 | 1.8 | 2.4 | 1.4 | 2.2 |
| Impact reistance strength | J/mmt | 4.6 | 7.7 | 4.7 | 8.3 | 5.1 | 7.7 | 4.5 |
| Evaluation result of molded article | | | | | | | | |
| Impact resistance test | | - | - | - | - | - | Good | - |
| High temperature environment test | | - | - | - | - | - | Poor | - |

| | | Comparative Example 8 | Reference example 1 | Comparative Example 9 | Comparative Example 10 | Comparative Example 11 | Comparative Example 12 |
|---|---|---|---|---|---|---|---|
| (Meth)acrylic resin (A1-1) | mass% | 97.5 | 85 | 90 | 90 | 42 | 99.1 |
| (Meth) acrylic resin (B1-1 = A1-2) | mass% | | | | | 58 | |
| Polycarbonate resin (B2-1) | mass% | 2.5 | 15 | | | | 0.9 |
| Polycarbonate resin (B2-3) | mass% | | | | | | |
| SMA resin (B3-1) | mass% | | | 10 | 10 | | |
| Polymer processing aid (PA-1) | phr | 2 | 2 | 2 | 2 | | 2 |
| Polymer processing aid (PA-2) | phr | | | | | 2 | |
| Resin composition | | [C5] | [C11] | [C8] | [C8] | [C12] | [C4] |
| Glass transition temperature | °C | 120 | 120 | 121 | 121 | 126 | 120 |
| Evaluation result of raw film | | | | | | | |
| Total light transmittance | % | 92 | 75 | 92 | 92 | 92 | 92 |
| Haze | % | 0.4 | 60 | 0.4 | 0.4 | 0.4 | 0.5 |
| Tear strength | gf | - | - | - | - | - | 0.8 |
| Impact resistance test | J/mmt | - | - | - | - | - | 1.6 |
| Stretching processing condition | | | | | | | |
| Stretching temperature | °C | 140 | - | 140 | 140 | 160 | - |
| Heat-setting temperature | °C | 140 | - | 30 | 140 | 130 | - |
| Relaxation temperature | °C | - | - | - | - | 135 | - |
| Relaxation rate | % | - | - | - | - | 5 | - |
| Evaluation result of stretched film | | [F17] | - | [F18] | [F19] | [F20] | - |
| Shrinkage starting temperature | °C | 110 | - | 102 | 110 | 120 | - |
| Linear expansion coefficient | ppm/°C | 65 | - | 56 | 63 | 65 | - |
| Total light transmittance | % | 92 | - | | | | - |
| Haze | % | 0.2 | - | 0.2 | 0.2 | 0.2 | - |
| Tear strength | gf | 2.7 | - | 1.4 | 3.7 | 4.4 | - |
| Impact reistance strength | J/mmt | 4.0 | - | 9.2 | 3.1 | 3.1 | - |
| Evaluation result of molded article | | | | | | | |
| Impact resistance test | | Poor | - | - | - | Poor | Poor |
| High temperature environment test | | Good | - | - | - | Good | - |

(Results)

In Examples 1 to 9, the thermoplastic resin compositions (C1) to (C9) containing the (meth)acrylic resins (A) having a glass transition temperature $T_A$ of 140°C or lower and the thermoplastic resins (B) having a glass transition temperature of ($T_A$+10°C) or higher were manufactured. The thermoplastic resin compositions (C1) to (C9) were formed

into a film to obtain a raw film and stretched films (F1) to (F9) were manufactured through the stretching process and the heat-setting process. Each of the stretched films (F1) to (F9) obtained in Examples 1 to 9 had high transparency, a linear expansion coefficient of 60 ppm or less, a high heat resistance of which a shrinkage starting temperature was 110°C or higher, and an excellent impact resistance of which an impact resistance strength was 4.5 J/mm or more.

Further, as a result of the evaluation of the molded article including the stretched film (F5) obtained in Example 5, the impact resistance strength of the stretched film (F5) of the surface part thereof was satisfactory, and the heat resistance thereof under high temperature environment was also satisfactory.

In Comparative Example 1 using a thermoplastic resin composition (C10) composed of the (meth)acrylic resin (A1-1) and the polymer processing aid (PR-1), the resultant stretched film (F10) had a high linear expansion coefficient exceeding 60 ppm/°C. In Comparative Examples 2 and 3, a shrinkage starting temperature and/or a linear expansion coefficient of the stretched films (F11) and (F12), which were obtained after the stretching process and the heat-setting process using the raw film obtained from the thermoplastic resin composition (C10), was/were insufficient. A shrinkage starting temperature or a linear expansion coefficient of the stretched films (F13) and (F14), which were obtained after the stretching process and the heat-setting process using the raw film obtained from the thermoplastic resin composition (C1), was insufficient.

The shrinkage starting temperature or a linear expansion coefficient of the stretched films (F15) to (F17), which were obtained after the stretching process and the heat-setting process using the raw film obtained from the thermoplastic resin composition (C5), was insufficient. In the evaluation of the molded article including the stretched film (F15), the heat resistance under high temperature and high humidity environment was insufficient. In the evaluation of the molded article including the stretched film (F17), the impact resistance strength was insufficient. In Comparative Example 9, the stretched film (F18) obtained after the stretching process and the heat-setting process using the raw film obtained from the thermoplastic resin composition (C8) had a low shrinkage starting temperature. In Comparative Examples 10 and 11, the stretched films (F19) and (F20) obtained after the stretching process and the heat-setting process using the raw film obtained from the thermoplastic resin composition (C8) or (C12) had a high linear expansion coefficient and a low impact resistance strength. In the evaluation of the molded article including the stretched film (F20), the impact resistance strength was insufficient. In Comparative Example 12, stretching processing was not performed and thus the impact resistance was significantly low.

The films obtained in Examples have a high light transmittance, a low haze, a low linear expansion coefficient, a high shrinkage starting temperature, and an excellent impact resistance as compared with the films obtained in Comparative Examples. For example, a film having a high light transmittance and a low haze is suitable for use as optical members. A winding state of a film having a low linear expansion coefficient is unlikely to change when it is used as a roll during actual use, and thus the film quality is maintained and the possibility of occurrence of warpage is reduced when it is laminated with a low linear expansion material. Accordingly, a quality of a molded article is stable. A film having a high shrinkage starting temperature can be used for a molded article under a harsh environment, for example, a higher temperature environment.

## Claims

**1.** A method for manufacturing an acrylic resin biaxially stretched film, the method comprising

biaxially stretching a raw film that comprises a thermoplastic resin composition [C] containing 99.9 to 50 mass% of a (meth)acrylic resin [A] having a glass transition temperature $T_A$ of 140°C or lower and 0.1 to 50 mass% of a thermoplastic resin [B] having a glass transition temperature $T_B$ of ($T_A$+10°C) or higher at a temperature of a glass transition temperature Tc of the resin composition [C] or higher and then
heat-setting the raw film at a temperature of (Tc-25°C) or higher but less than $T_C$, wherein the glass transition temperature is determined as explained in the description.

**2.** The method for manufacturing an acrylic resin biaxially stretched film according to Claim 1, wherein in the biaxial stretching, a stretching magnification is 1.5 to 3 times in both a longitudinal direction and a width direction.

**3.** The method for manufacturing an acrylic resin biaxially stretched film according to Claim 1 or 2, wherein in the acrylic resin film, a shrinkage starting temperature is 110°C or higher, a linear expansion coefficient is 60 ppm/°C or less, and an impact resistance strength is 4.5 J/mm or more,
wherein the shrinkage starting temperature, the linear expansion coefficient and the impact resistance strength are determined as explained in the description.

**4.** An acrylic resin biaxially stretched film obtainable by the method according to any one of claims 1 to 3 that comprises

a thermoplastic resin composition [C], the thermoplastic resin composition [C] containing:

99.9 to 50 mass% of a (meth)acrylic resin [A] having a glass transition temperature $T_A$ of 140°C or lower; and 0.1 to 50 mass% of a thermoplastic resin [B] having a glass transition temperature $T_B$ of ($T_A$+10°C) or higher, wherein
a shrinkage starting temperature is 110°C or higher, a linear expansion coefficient is 60 ppm/°C or less, and an impact resistance strength is 4.5 J/mm or more,
wherein the glass transition temperature, the shrinkage starting temperature, the linear expansion coefficient and the impact resistance strength are determined as explained in the description.

**5.** The acrylic resin biaxially stretched film according to Claim 4, wherein a tear strength is 1.5 gf or more, wherein the tear strength is determined as explained in the description.

**6.** The acrylic resin biaxially stretched film according to Claim 4 or 5, wherein the thermoplastic resin composition [C] has a single glass transition temperature Tc.

**7.** The acrylic resin biaxially stretched film according to any one of Claims 4 to 6, wherein the thermoplastic resin [B] comprises at least one type of a thermoplastic resin selected from a group composed of a polycarbonate resin, a copolymer composed of at least a structural unit derived from an aromatic vinyl compound expressed by a following general formula (a) and a structural unit derived from an acid anhydride expressed by a following general formula (b), and a methacrylic resin having a triad syndiotacticity (rr) of 58% or more and a content of a structural unit derived from methyl methacrylate of 90 mass% or more.

[Formula 1]

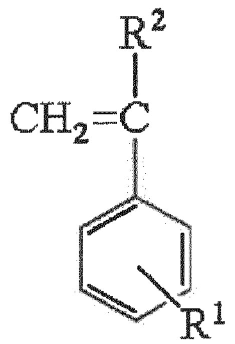

(a)

(In the formula: $R^1$ and $R^2$ each independently indicates a hydrogen atom or an alkyl group.)

[Formula 2]

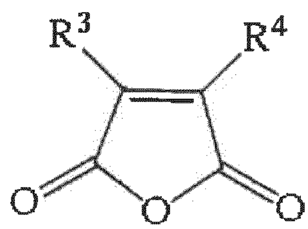

(b)

(In the formula: $R^3$ and $R^4$ each independently indicates a hydrogen atom or an alkyl group.)

**8.** The acrylic resin biaxially stretched film according to any one of Claims 4 to 7, wherein a stretching magnification is 1.5 to 3 times in both a longitudinal direction and a width direction.

9. A polarizer protective film, an optical compensation film or a decorative film comprising the film according to any one of Claims 4 to 8.

## Patentansprüche

1. Verfahren zur Herstellung einer biaxial gestreckten Acrylharzfolie, wobei das Verfahren umfasst
biaxiales Strecken einer Rohfolie, welche eine thermoplastische Harzzusammensetzung [C] umfasst, enthaltend 99,9 bis 50 Massen-% eines (Meth)acrylatharzes [A] mit einer Glasübergangstemperatur $T_A$ von 140°C oder niedriger und 0,1 bis 50 Massen-% eines thermoplastischen Harzes [B] mit einer Glasübergangstemperatur $T_B$ von ($T_A$+10°C) oder höher, bei einer Temperatur einer Glasübergangstemperatur Tc der Harzzusammensetzung [C] oder höher und dann Wärmehärten der Rohfolie bei einer Temperatur von (Tc-25°C) oder höher, aber weniger als Tc, wobei die Glasübergangstemperatur wie in der Beschreibung erläutert bestimmt wird.

2. Verfahren zur Herstellung einer biaxial gestreckten Acrylharzfolie nach Anspruch 1, wobei in dem biaxialen Strecken eine streckende Vergrößerung sowohl in einer Längsrichtung als auch in einer Breitenrichtung das 1,5- bis 3-fache beträgt.

3. Verfahren zur Herstellung einer biaxial gestreckten Acrylharzfolie nach Anspruch 1 oder 2, wobei in der Acrylharzfolie eine Schrumpstarttemperatur 110°C oder höher beträgt, ein linearer Ausdehnungskoeffizient 60 ppm/°C oder weniger beträgt und eine Schlagzähigkeit 4,5 J/mm oder mehr beträgt, wobei die Schrumpstarttemperatur, der lineare Ausdehnungskoeffizient und die Schlagzähigkeit wie in der Beschreibung erläutert bestimmt werden.

4. Biaxial gestreckte Acrylharzfolie, erhältlich durch das Verfahren nach einem der Ansprüche 1 bis 3, welche eine thermoplastische Harzzusammensetzung [C] umfasst, wobei die thermoplastische Harzzusammensetzung [C] enthält:

   99,9 bis 50 Massen-% eines (Meth)acrylatharzes [A] mit einer Glasübergangstemperatur $T_A$ von 140°C oder niedriger; und
   0,1 bis 50 Massen-% eines thermoplastischen Harzes [B] mit einer Glasübergangstemperatur $T_B$ von ($T_A$+10°C) oder höher, wobei
   eine Schrumpstarttemperatur 110°C oder höher beträgt, ein linearer Ausdehnungskoeffizient 60 ppm/°C oder weniger beträgt und eine Schlagzähigkeit 4,5 J/mm oder mehr beträgt, wobei die Glasübergangstemperatur, die Schrumpstarttemperatur, der lineare Ausdehnungskoeffizient und die Schlagzähigkeit wie in der Beschreibung erläutert bestimmt werden.

5. Biaxial gestreckte Acrylharzfolie nach Anspruch 4, wobei eine Reißfestigkeit 1,5 gf oder mehr beträgt, wobei die Reißfestigkeit wie in der Beschreibung erläutert bestimmt wird.

6. Biaxial gestreckte Acrylharzfolie nach Anspruch 4 oder 5, wobei die thermoplastische Harzzusammensetzung [C] eine einzige Glasübergangstemperatur Tc aufweist.

7. Biaxial gestreckte Acrylharzfolie nach einem der Ansprüche 4 bis 6, wobei das thermoplastische Harz [B] mindestens einen Typ eines thermoplastischen Harzes, ausgewählt aus einer Gruppe, zusammengesetzt aus einem Polycarbonatharz, einem Copolymer, zusammengesetzt aus mindestens einer strukturellen Einheit, die von einer aromatischen Vinylverbindung, ausgedrückt durch eine folgende allgemeine Formel (a), abgeleitet ist, und einer strukturellen Einheit, die von einem Säureanhydrid, ausgedrückt durch eine folgende allgemeine Formel (b), abgeleitet ist, und ein Methacrylatharz mit einer triadischen Syndiotaktizität (rr) von 58% oder mehr, und einen Gehalt einer strukturellen Einheit, abgeleitet von Methylmethacrylat, von 90 Massen-% oder mehr, umfasst.

[Formel 1]

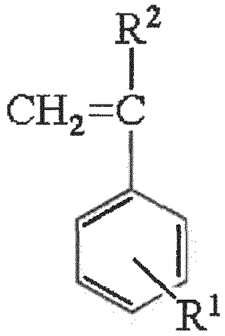

(a)

(In der Formel: $R^1$ und $R^2$ geben jeweils unabhängig ein Wasserstoffatom oder eine Alkylgruppe an)

[Formel 2]

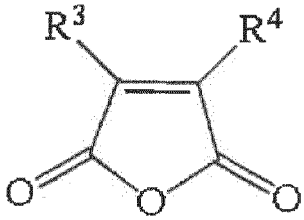

(b)

(In der Formel: $R^3$ und $R^4$ geben jeweils unabhängig ein Wasserstoffatom oder eine Alkylgruppe an)

8. Biaxial gestreckte Acrylharzfolie nach einem der Ansprüche 4 bis 7, wobei eine streckende Vergrößerung sowohl in einer Längsrichtung als auch in einer Breitenrichtung das 1,5- bis 3-fache beträgt.

9. Polarisatorschutzfolie, optische Ausgleichsfolie oder Dekorationsfolie, umfassend die Folie nach einem der Ansprüche 4 bis 8.

**Revendications**

1. Procédé de fabrication d'un film de résine acrylique étiré de manière biaxiale, le procédé comprenant

   étirer de manière biaxiale un film brut qui comprend une composition de résine thermoplastique [C] contenant 99,9 à 50 % en masse d'une résine (méth)acrylique [A] ayant une température de transition vitreuse $T_A$ de 140 °C ou inférieure et 0,1 à 50 % en masse d'une résine thermoplastique [B] ayant une température de transition vitreuse Ta de ($T_A$+10 °C) ou supérieure à une température de transition vitreuse Tc de la composition de résine [C] ou supérieure, puis
   thermodurcir le film brut à une température de (Tc-25 °C) ou supérieure mais inférieure à Tc, dans lequel la température de transition vitreuse est déterminée tel qu'expliqué dans la description.

2. Procédé de fabrication d'un film de résine acrylique étiré de manière biaxiale selon la revendication 1, dans lequel dans l'étirement biaxial, un grossissement d'étirement est de 1,5 à 3 fois à la fois dans une direction longitudinale et un sens de la largeur.

3. Procédé de fabrication d'un film de résine acrylique étiré de manière biaxiale selon la revendication 1 ou 2, dans lequel dans le film de résine acrylique, une température de départ de rétrécissement est de 110 °C ou supérieure, un coefficient de dilatation linéaire est de 60 ppm/°C ou moins, et une résistance aux chocs est de 4,5 J/mm ou plus, dans lequel la température de départ de rétrécissement, le coefficient de dilatation linéaire et la résistance aux chocs sont déterminés tel qu'expliqué dans la description.

**4.** Film de résine acrylique étiré de manière biaxiale pouvant être obtenu par le procédé selon l'une quelconque des revendications 1 à 3 qui comprend une composition de résine thermoplastique [C], la composition de résine thermoplastique [C] contenant :

99,9 à 50 % en masse d'une résine (méth)acrylique [A] ayant une température de transition vitreuse Ta de 140 °C ou inférieure ; et
0,1 à 50 % en masse d'une résine thermoplastique [B] ayant une température de transition vitreuse $T_B$ de ($T_A$+10 °C) ou supérieure, dans lequel
une température de départ de rétrécissement est de 110 °C ou supérieure, un coefficient de dilatation linéaire est de 60 ppm/°C ou moins, et une résistance aux chocs est de 4,5 J/mm ou plus,
dans lequel la température de transition vitreuse, la température de départ de rétrécissement, le coefficient de dilatation linéaire et la résistance aux chocs sont déterminés tel qu'expliqué dans la description.

**5.** Film de résine acrylique étiré de manière biaxiale selon la revendication 4, dans lequel une résistance à la déchirure est de 1,5 gf ou plus,
dans lequel la résistance à la déchirure est déterminée tel qu'expliqué dans la description.

**6.** Film de résine acrylique étiré de manière biaxiale selon la revendication 4 ou 5, dans lequel la composition de résine thermoplastique [C] a une température de transition vitreuse unique $T_C$.

**7.** Film de résine acrylique étiré de manière biaxiale selon l'une quelconque des revendications 4 à 6, dans lequel la résine thermoplastique [B] comprend au moins un type d'une résine thermoplastique sélectionnée parmi un groupe composé d'une résine de polycarbonate, d'un copolymère composé d'au moins une unité structurelle dérivée d'un composé de vinyle aromatique exprimée par une formule générale suivante (a) et une unité structurelle dérivée d'un anhydride acide exprimée par une formule générale suivante (v), et d'une résine méthacrylique ayant une syndiotacticité de triades (rr) de 58 % ou plus et une teneur en une unité structurelle dérivée de méthacrylate de méthyle de 90 % en masse ou plus.

[Formule 1]

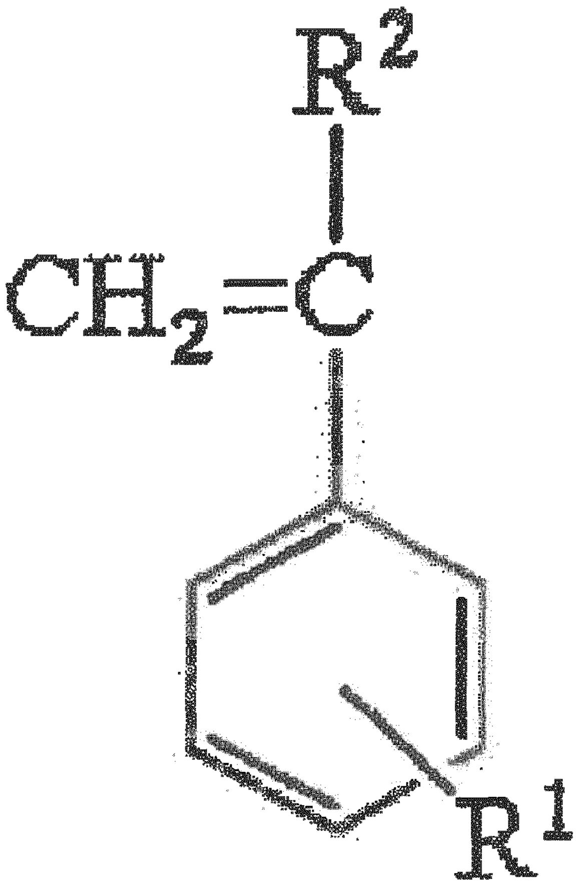

(a)

(Dans la formule : $R^1$ et $R^2$ indiquent chacun indépendamment un atome d'hydrogène ou un groupe alkyle.)

[Formule 2]

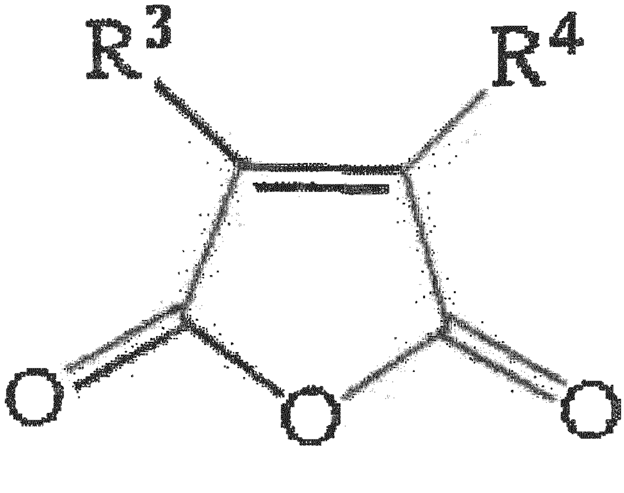

(b)

(Dans la formule : $R^3$ et $R^4$ indiquent chacun indépendamment un atome d'hydrogène ou un groupe alkyle.)

**8.** Film de résine acrylique étiré de manière biaxiale selon l'une quelconque des revendications 4 à 7, dans lequel un grossissement d'étirement est de 1,5 à 3 fois à la fois dans une direction longitudinale et un sens de la largeur.

**9.** Film protecteur polarisant, film de compensation optique ou film décoratif comprenant le film selon l'une quelconque des revendications 4 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012051997 A
- JP 2014064519 A
- WO 2015151466 A
- JP 2016113579 A
- WO 2016076357 A1
- WO 2015151466 A1
- JP H725859 B
- JP H11335432 A
- JP H693060 A
- WO 2014021264 A
- WO 2011089794 A
- WO 2012124395 A
- JP 2012012476 A
- JP 2013023461 A
- JP 2013112790 A
- JP 2013194037 A
- JP 2014062228 A
- JP 2014088542 A
- JP 2014088543 A